# EUROPÄISCHE PATENTSCHRIFT

(11) **EP 4 137 302 B1**
(45) Veröffentlichungstag und Bekanntmachung des Hinweises auf die Patenterteilung: **18.10.2023**
(21) Anmeldenummer: 21191436.1
(22) Anmeldetag: 16.08.2021
(51) Int. Cl.: B29D 30/06, B29C 35/02, G03B 13/00

(54) **VERFAHREN UND AUSWERTEEINRICHTUNG ZUR ÜBERWACHUNG EINES VULKANISIERVORGANGS EINES FAHRZEUGREIFENS IN EINER REIFENHEIZ-PRESSVORRICHTUNG**
METHOD AND EVALUATION DEVICE FOR MONITORING A VULCANIZATION PROCESS OF A VEHICLE TYRE IN A TYRE HEATING AND PRESSING DEVICE
PROCÉDÉ ET DISPOSITIF D'ÉVALUATION PERMETTANT DE SURVEILLER UN PROCESSUS DE VULCANISATION D'UN PNEU DE VÉHICULE DANS UN DISPOSITIF DE PRESSAGE PAR CHAUFFAGE DE PNEU

(43) Veröffentlichungstag der Anmeldung: 22.02.2023
(73) Patentinhaber: Siemens Aktiengesellschaft, 80333 München (DE)
(72) Erfinder: Freller, Robert, 91207 Lauf (DE); Kaul, Shehjar, 90439 Nuremberg (DE)
(74) Vertreter: Siemens Patent Attorneys

(56) Entgegenhaltungen:
- WO-A1-2013/099371
- CN-A- 110 722 818
- US-A- 4 044 600
- US-A- 4 371 483
- US-A1- 2005 119 785
- US-A1- 2010 005 863
- US-A1- 2010 007 038

## Beschreibung

Die vorliegende Erfindung betrifft ein Verfahren sowie eine Auswerteeinrichtung zur Überwachung eines Vulkanisiervorgangs eines Fahrzeugreifens in einer Reifenheiz-Pressvorrichtung, wobei die Reifenheiz-Pressvorrichtung insbesondere einen elastischen Heizbalg umfasst, der zur Unterstützung eines Vulkanisiervorgangs eines in der Reifenheiz-Pressvorrichtung befindlichen Fahrzeugreifens ausgebildet und eingerichtet ist, und
wobei mindestens ein Sensorwert und/oder mindestens eine Steuergröße der Reifenheiz-Pressvorrichtung erfasst wird. Derartige Verfahren sind aus dem Stand der Technik bekannt. So offenbart z.B. die Patentschrift US 7,987,697 B2 ein Verfahren zur Prozesskontrolle eines Vulkanisiervorgangs eines Fahrzeugreifens, wobei im Rahmen des Vulkanisiervorgangs dem zum Aufpumpen des Heizbalgs verwendeten Gas zusätzlich Stickstoff beigemischt wird. Hat nun der Heizbalg ein Leck, so lässt sich der Stickstoff auch im Bereich zwischen Heizbalg und dem zu vulkanisierenden Reifen nachweisen. Mit Hilfe eines entsprechenden Nachweissystems lässt sich auf diese Weise ein Leck im Heizbalg nachweisen.

Es ist ein Nachteil des Standes der Technik, dass die Reifenheiz-Pressvorrichtung konstruktiv und apparativ erweitert werden muss, um ein entsprechendes Leck im Heizbalg der Presse nachweisen zu können. Außerdem wird neben den normalen Prozessgasen auch noch zusätzlich weiteres Gas benötigt, was Aufwand und Kosten für eine entsprechende Reifenheiz-Pressvorrichtung weiter vergrößert.

Daher ist es eine Aufgabe der vorliegenden Erfindung, ein Verfahren oder System zur Verfügung zu stellen, welchen den apparativen und/oder konstruktiven Aufwand zur Realisierung einer Anlagenüberwachung und/oder Prozesskontrolle für eine Reifenheiz-Pressvorrichtung gegenüber dem Stand der Technik reduziert.

Diese Aufgabe wird gelöst durch Verfahren mit den Merkmalen des Patentanspruchs 1 und einer Auswerteeinrichtung mit den Merkmalen des Patentanspruchs 15. Das erfindungsgemäße Verfahren ist zur Überwachung eines Vulkanisiervorgangs eines Fahrzeugreifens in einer Reifenheiz-Pressvorrichtung ausgebildet und eingerichtet,
wobei mindestens ein Sensorwert und/oder mindestens eine Steuergröße der Reifenheiz-Pressvorrichtung erfasst wird, und wobei weiterhin
- der mindestens eine Sensorwert und/oder die mindestens eine Steuergröße einer Auswerteeinrichtung zur Auswertung zugeführt wird,
- die Auswerteeinrichtung ein vermittels eines maschinellen Lernverfahrens eingerichtetes ML-Modell umfasst,
- und die Auswerteeinrichtung und/oder das ML-Modell eine Warnmeldung ausgibt, wenn eine Auswertung des mindestens einen Sensorwerts und/oder der mindestens einen Steuergröße durch die Auswerteeinrichtung ergibt,
   o dass ein Defekt oder eine Anomalie der Reifenheiz-Pressvorrichtung oder zumindest eines Teils der Reifenheiz-Pressvorrichtung vorliegt,
   o oder dass ein Defekt oder eine Anomalie der Reifenheiz-Pressvorrichtung oder zumindest eines Teils der Reifenheiz-Pressvorrichtung in absehbarer Zeit bevorsteht.

Dabei kann weiterhin vorgesehen sein, dass eine Warnmeldung dann ausgegeben wird, wenn eine Auswertung des mindestens einen Sensorwerts und/oder der mindestens einen Steuergröße durch die Auswerteeinrichtung unter Verwendung des ML-Modells ergibt,
- dass ein Defekt oder eine Anomalie der Reifenheiz-Pressvorrichtung oder zumindest eines Teils der Reifenheiz-Pressvorrichtung vorliegt,
- oder dass ein Defekt oder eine Anomalie der Reifenheiz-Pressvorrichtung oder zumindest eines Teils der Reifenheiz-Pressvorrichtung in absehbarer Zeit bevorsteht.

Das Verfahren kann beispielsweise derart ausgebildet und eingerichtet werden, dass ausschließlich Sensorwerte von Sensoren herangezogen werden, welche in der Reifenheizpresse-Pressvorrichtung sowieso bereits vorhanden sind. Auch Steuergrößen können beispielsweise von Steuereinrichtungen der Reifenheiz-Pressvorrichtung bezogen werden, welche standardmäßig in der Reifenheiz-Pressvorrichtung vorgesehen sind. Auf diese Weise ergibt sich ein gegenüber dem Stand der Technik deutlich reduzierter apparative und/oder konstruktiver Aufwand, um eine Prozesskontrolle bei einer Reifenheiz-Pressvorrichtung zu implementieren, da z.B. zumindest unter anderem dafür keine gesonderte Hardware erforderlich ist. So lässt sich ein Verfahren gemäß der vorliegenden Beschreibung z.B. einfacher in einer bestehenden Reifenheiz-Pressvorrichtung implementieren.

Durch die Verwendung eines ML-Modells wird die Verwendung von beispielsweise bereits an sich in der Reifenheiz-Pressvorrichtung vorgesehenen Sensoren weiter vereinfacht, indem durch ein entsprechendes Training bzw. eine entsprechende Einrichtung eines solchen ML-Modells die Erkennung, wann beispielsweise eine entsprechende Störung oder Anomalie auftritt, oder möglicherweise auftreten wird, an die speziellen Eigenheiten der verbauten Sensorik anpassbar ist. Auch dies trägt zu einer weiteren Reduktion des apparativen und/oder konstruktiven Aufwands zur Realisierung einer Prozesskontrolle für eine Reifenheiz-Pressvorrichtung bei.

In einer vorteilhaften Ausgestaltung kann beispielsweise vorgesehen sein, dass der mindestens eine Sensorwert und/oder die mindestens eine Steuergröße im Rahmen eines Vulkanisiervorgangs des in der Reifenheiz-Pressvorrichtung befindlichen Fahrzeugreifens erfasst wird. Dabei kann der Vulkanisiervorgang beispielsweise die Schritte: Beladen der Reifenheiz-Pressvorrichtung mit einem Reifenrohling des Fahrzeugreifens, vulkanisieren des Fahrzeugreifens und Entnehmen des vulkanisierten Fahrzeugreifens aus der Reifenheiz-Pressvorrichtung umfassen.

Weiterhin kann vorgesehen sein, dass der mindestens eine Sensorwert und/oder die mindestens eine Steuergröße im Rahmen einer Stillstandszeit, einer Vorbereitungszeit und/oder einer Nachbereitungszeit der Reifenheiz-Pressvorrichtung erfasst wird. Dabei kann die Stillstandszeit der Reifenheiz-Pressvorrichtung beispielsweise als eine Zeit ausgebildet und eingerichtet sein, in welcher in der Reifenheiz-Pressvorrichtung kein Fahrzeugreifen vulkanisiert wird. Eine Vorbereitungszeit kann beispielsweise derart ausgebildet und eingerichtet sein, dass in dieser Zeit die Reifenheiz-Pressvorrichtung zum Vulkanisieren von Fahrzeugreifen vorbereitet wird. Eine Nachbereitungszeit kann derart ausgebildet und eingerichtet sein, dass in dieser ein Übergang der Reifenheiz-Pressvorrichtung vom Vulkanisieren eines Fahrzeugreifens in eine Stillstandszeit erfolgt.

Es kann auch vorgesehen sein, dass der mindestens eine Sensorwert und/oder die mindestens eine Steuergröße im Rahmen einer gesonderten Analyse-Verfahrenssequenz der Reifenheiz-Pressvorrichtung erfasst wird. Dabei kann die Analyse-Verfahrenssequenz derart ausgebildet und eingerichtet sein, dass man durch eine Auswertung des mindestens einen Sensorwerts oder der mindestens einen Steuergröße durch die Auswerteeinrichtung z.B. unter Verwendung des ML Modells besonders vorteilhaft Anomalien oder Defekte der Reifenheiz-Pressvorrichtung oder Teilen davon nachweisen kann - oder solche Anomalien oder Defekte vorhersagen kann.

Unter einer Reifenheiz-Pressvorrichtung, auch als Vulkanisierpresse oder "Curing Press" bezeichnet, wird eine Maschine oder Anlage verstanden, welche zum Vulkanisieren von Fahrzeugreifen ausgebildet und eingerichtet ist. Bei diesem Verfahrensschritt im Rahmen der Produktion von Fahrzeugreifen handelt es sich um einen Aushärtungsschritt, bei welchem der entsprechende Fahrzeugreifen seine endgültige Form erhält.

Bei diesem Aushärtungsprozess wird er eine bestimmte Zeit lang mit einem geeigneten Druck und einer geeigneten Temperatur vulkanisiert. Während dieses Arbeitsschritts wird der Rohkautschuk in biegsames und elastisches Gummi umgewandelt. Außerdem erhält der Reifen in einer entsprechenden Form der Vulkanisierpresse bzw. der Reifenheiz-Pressvorrichtung sein Profil und seine Seitenwandmarkierungen.

Üblicherweise umfasst eine solche Vulkanisierpresse ein oder zwei Formen, welche je einen sogenannten Reifenrohling oder auch "Green Tire" aufnehmen können. Eine solche Vulkanisierpresse umfasst in der Regel Leitungssysteme für heiße Gase, Flüssigkeiten oder Vakuum sowie Transportbänder zum Zu- und Abtransportieren der Reifenrohlinge sowie der fertig Vulkanisierten Fahrzeugreifens.

Im Rahmen eines Vulkanisiervorgangs eines Reifenrohling in einer solchen Reifenheiz-Pressvorrichtung wird dann in der Regel ein sogenannter Heizbalg (Englisch: "bladder") im Innenbereich des Reifenrohlings, ähnlich einem Fahrradschlauch, lokalisiert und dann diesem Heizbalg ein heißes Gas oder eine heiße Flüssigkeit unter hohem Druck zugeführt. Auf diese Weise drückt der Heizbalg den Reifenrohling in die Form, wobei dann z.B. Reifenprofil und Beschriftungen eingeprägt werden, und löst weiterhin durch die hohe Temperatur den Vulkanisiervorgang des Reifens aus. Nach dem Vulkanisiervorgang wird der nun vulkanisierte Fahrzeugreifen der entsprechenden Form entnommen und dem nächsten Prozessschritt der Reifenherstellung zugeführt.

Der mindestens eine Sensorwert kann beispielsweise ein von einem Sensor gelieferter digitaler oder analoger Wert sein. Dabei kann der Wert beispielsweise unmittelbar vom Sensor geliefert werden oder auch nach einer entsprechenden Vorverarbeitung oder Digital-Analog Wandlung oder Analog-Digital Wandlung. Sensoren können dabei jede Art von Sensoren, wie beispielsweise Temperatursensoren, Drucksensoren, Durchflusssensoren, Füllstandsensoren, Geschwindigkeitssensoren, Zähler, Beschleunigungssensoren oder vergleichbare Sensoren sein. Weiterhin kann ein Sensor auch als ein sogenannter Software-Sensor oder virtueller Sensor ausgebildet und eingerichtet sein.

Der mindestens eine Sensorwert kann beispielsweise ein Wert eines Sensors sein, welcher zu einem bestimmten Zeitpunkt, beispielsweise im Rahmen eines Vulkanisierprozesses oder auch eines speziellen Analyse-Verfahrensablaufs, erfasst wurde. Weiterhin kann der mindestens eine Sensorwert als mehrere Sensorwerte ausgebildet und eingerichtet sein, wobei jeder der mehreren Sensorwerte von einem unterschiedlichen Sensor stammen kann und z.B. zu einem bestimmten, beispielsweise vorgegebenen oder vorgebbaren Zeitpunkt erfasst wurde, z.B. im Rahmen eines Vulkanisierprozesses der auch eines speziellen Analyse-Verfahrensablaufs.

Weiterhin kann der mindestens eine Sensorwert als eine oder mehrere Zeitreihen von Werten eines oder mehrerer Sensoren ausgebildet und eingerichtet sein, wobei beispielsweise eine Zeitreihe eines Sensors zu regelmäßigen Zeitpunkten aufgenommen sein kann oder auch zu bestimmten, fest vorgegebenen Zeitpunkten mit unterschiedlichen Zeitabständen, beispielsweise im Rahmen eines Vulkanisierprozesses oder auch eines speziellen Analyse-Verfahrensablaufs.

Der mindestens eine Sensorwert kann auch Kombinationen von Werten gemäß der vorliegenden Beschreibung umfassen - z.B. von einem oder mehreren Sensoren gemäß der vorliegenden Beschreibung.

Die Steuergröße der Reifenheiz-Pressvorrichtung kann beispielsweise ein analoger oder digitaler Wert, ein Befehl, eine Befehlsfolge oder auch eine Nachricht sein, welcher beispielsweise von einer Steuereinrichtung z.B. an einen Aktor oder eine weitere Steuereinrichtung der Reifenheiz-Pressvorrichtung gesendet wird. Dabei kann die Steuereinrichtung beispielsweise Teil der Reifenheiz-Pressvorrichtung sein oder auch außerhalb der Reifenheiz-Pressvorrichtung befindlich sein. Ein Aktor kann beispielsweise ein Motor, ein Antrieb, ein Regler, ein Ventil, eine Anzeigeneinrichtung, eine Pumpe, ein Ventilsteller oder eine vergleichbare Einrichtung sein.

Eine Steuereinrichtung kann beispielsweise ein Computer, eine speicherprogrammierbare Steuerung, eine modulare speicherprogrammierbare Steuerung, ein Controller, ein Microcontroller, eine dezentrale Peripherie-Einrichtung oder eine vergleichbare Einrichtung sein.

Dabei kann die Übertragung des analogen oder digitalen Wertes oder Befehls von der Steuereinrichtung an den Aktor oder die weitere Steuereinrichtung der Reifenheiz-Pressvorrichtung beispielsweise über eine Eindrahtleitung, eine Zweidrahtleitung, einen Feldbus oder eine vergleichbare drahtgebundene oder drahtlose Kommunikationsverbindung erfolgen.

Ganz allgemein kann eine Steuereinrichtung jede Art von Computer oder Computersystem sein, welcher z.B. zur Steuerung eines Apparats, eines Geräts, einer Vorrichtung oder einer Anlage ausgebildet und eingerichtet ist. Bei der Steuerung kann es sich auch um einen Computer, ein Computersystem oder auch eine sogenannte "Cloud" handeln, auf der eine Steuerungssoftware oder eine Steuerungssoftware-Anwendung, zum Beispiel eine Steuerungsanwendung oder Steuerungs-App, implementiert bzw. installiert ist. Eine solche in der Cloud implementierte Steuerungsanwendung kann z.B. als eine Applikation mit der Funktionalität einer speicherprogrammierbaren Steuerung ausgebildet und eingerichtet sein.

Die Steuereinrichtung kann weiterhin auch als ein sogenanntes Edge-Device ausgebildet und eingerichtet sein, wobei ein solches Edge-Device beispielsweise eine Applikation zur Steuerung von Vorrichtungen oder Anlagen umfassen kann. Beispielsweise kann eine solche Applikation als eine Applikation mit der Funktionalität einer speicherprogrammierbaren Steuerung ausgebildet und eingerichtet sein. Das Edge-Device kann dabei beispielsweise mit einer weiteren Steuereinrichtung einer Vorrichtung oder Anlage verbunden sein oder auch unmittelbar mit einer zu steuernden Vorrichtung oder Anlage. Weiterhin kann das Edge-Device derart ausgebildet und eingerichtet sein, dass es zusätzlich noch mit einem Datennetzwerk oder einer Cloud verbunden ist bzw. zur Verbindung mit einem entsprechenden Datennetzwerk oder einer entsprechenden Cloud ausgebildet und eingerichtet ist.

Die Steuereinrichtung kann beispielsweise auch als eine sogenannte speicherprogrammierbare Steuerung (SPS) ausgebildet und eingerichtet sein. Weiterhin kann die Steuerungseinrichtung auch als eine sogenannte modulare speicherprogrammierbare Steuerung (modulare SPS) eingerichtet und ausgestaltet sein.

Bei einer speicherprogrammierbaren Steuerung, kurz SPS, handelt es sich um eine Komponente, die programmiert und eingesetzt wird, um eine Anlage oder Maschine zu regeln bzw. zu steuern. In einer SPS können spezifische Funktionen wie beispielsweise eine Ablaufsteuerung implementiert werden, so dass auf diese Weise sowohl die Eingangs- als auch die Ausgangssignale von Prozessen oder Maschinen gesteuert werden können. Definiert wird die speicherprogrammierbare Steuerung beispielsweise zumindest teilweise im Standard EN 61131 oder im Standard IEC 61131.

Um eine speicherprogrammierbare Steuerung an die Anlage bzw. Maschine anzubinden, kommen sowohl Aktoren, die im Allgemeinen an den Ausgängen der speicherprogrammierbaren Steuerung angeschlossen sind, als auch Sensoren zum Einsatz. Des Weiteren werden Statusanzeigen verwendet. Grundsätzlich befinden sich die Sensoren an den SPS-Eingängen, wobei durch sie die speicherprogrammierbare Steuerung Informationen darüber erhält, was in der Anlage bzw. Maschine von statten geht. Als Sensoren gelten beispielsweise: Lichtschranken, Endschalter, Taster, Inkrementalgeber, Füllstandsensoren, Temperaturfühler und Drucksensoren. Als Aktoren gelten z.B: Schütze zum Einschalten elektrischer Motoren, elektrische Ventile für Druckluft oder Hydraulik, Antriebssteuerungsmodule, Motoren, Antriebe.

Die Realisierung eine SPS kann auf verschiedene Art und Weise erfolgen. Das heißt, sie kann als elektronisches Einzelgerät, als Softwareemulation, als PC-Einsteckkarte usw. verwirklicht werden. Häufig finden sich auch modulare Lösungen, im Rahmen derer die SPS aus mehreren Steckmodulen zusammengebaut wird.

Die Auswerteeinrichtung kann jede Computereinrichtung sein, welche genügend Speicher und Rechenkapazität aufweist, um die Speicherung, den Betrieb und/oder das Handling das entsprechenden ML-Modells zu übernehmen. Insbesondere kann die Auswerteeinrichtung beispielsweise eine entsprechende Steuereinrichtung, ein entsprechender Controller, eine speicherprogrammierbare Steuerung, eine modulare speicherprogrammierbare Steuerung oder eine vergleichbare Einrichtung sein. Weiterhin kann die Auswerteeinrichtung beispielsweise als ein sogenanntes Edge-Device ausgebildet und eingerichtet sein. Die Auswerteeinrichtung kann weiterhin auch eine Rechner-Hardware, ein Computer oder auch Teil eines Rechennetzwerks sein, beispielsweise eine Applikation in einer Cloud oder auch in einem Rechner-Netzwerk oder einer entsprechenden Server- oder Recheneinrichtung.

Eine Auswerteeinrichtung kann z.B. auch als eine virtuelle Auswerteeinrichtungs-Instanz ausgebildet und eingerichtet sein, die z.B. auf einer entsprechenden Hardware, einem entsprechenden Rechnernetzwerk oder einer Cloud abläuft oder ablaufen kann. Dabei wird beim Ablauf der virtuellen Auswerteeinrichtungs-Instanz die Funktionalität der Auswerteeinrichtung erzeugt.

Beispielsweise kann die Auswerteeinrichtung auch Teil einer Steuereinrichtung bzw. eines Steuercomputers für die Reifenheiz-Pressvorrichtung sein.

Die Auswerteeinrichtung kann auch aus mehreren Teileinrichtungen zusammengesetzt sein. Diese können beispielsweise kommunikativ gekoppelt sein. Dabei kann jede der Teileinrichtungen dann wiederum gemäß der vorstehend erläuterten Ausgestaltungsmöglichkeiten für eine Auswerteeinrichtung ausgebildet und eingerichtet sein kann.

Die Auswerteeinrichtung kann weiterhin derart ausgebildet und eingerichtet sein, dass der ihr zugeführte mindestens eine Sensorwert und/oder die ihr zugeführte mindestens eine Steuergröße unmittelbar oder mittelbar dem ML-Modell zugeleitet werden, insbesondere dem ML-Modell als eine Eingangsgröße zugeleitet werden.

Weiterhin kann die Auswerteeinrichtung zur Bearbeitung oder Weiterverarbeitung des mindestens einen Sensorwerts und/oder der mindestens einen Steuergröße ausgebildet und eingerichtet sein. Eine solche Bearbeitung oder Weiterverarbeitung kann z.B. eine Normierung, Umrechnung, Transformation, Umformatierung, Übersetzung und/oder ein anderer vergleichbarer Verarbeitungsschritt sein oder einen solchen umfassen.

Dabei kann die Auswerteeinrichtung derart ausgebildet und eingerichtet sein, dass nach einer Bearbeitung oder Weiterverarbeitung des mindestens einen Sensorwerts und/oder der mindestens einen Steuergröße ein oder mehrere Ergebnisse einer solchen Bearbeitung oder Weiterverarbeitung dem ML-Modell zugeführt werden, insbesondere dem ML-Modell als eine oder mehrere Eingangsgrößen zugeführt werden.

Die Auswerteeinrichtung kann weiterhin beispielsweise eine Simulationsumgebung umfassen, die zum Ablauf eines Simulationsprogramms zur Simulation der Reifenheiz-Pressvorrichtung, oder zur Simulation von Teilen oder Komponenten der Reifenheiz-Pressvorrichtung, ausgebildet und eingerichtet ist. Die Auswerteeinrichtung kann weiterhin auch eine Simulationsumgebung mit einem Simulationsprogramm zur Simulation der Reifenheiz-Pressvorrichtung oder auch zur Simulation von einem oder mehreren Teilen oder Komponenten der Reifenheiz-Pressvorrichtung umfassen.

Simulierte Teile oder Komponenten der Reifenheiz-Pressvorrichtung können beispielsweise Vorrichtungsteile sein oder umfassen, die zur Zufuhr und/oder zur Ableitung eines Gases oder einer Flüssigkeit zu einem elastischen Heizbalg vorgesehen sind. Weiterhin kann ein simulierter Teil der Reifenheiz-Pressvorrichtung auch ein solcher elastischer Heizbalg selbst sein oder einen solchen umfassen.

Die genannte Bearbeitung oder Weiterverarbeitung des mindestens einen Sensorwerts und/oder der mindestens einen Steuergröße durch die Auswerteeinrichtung kann dabei als Verwendung des mindestens einen Sensorwerts bzw. der mindestens einen Steuergröße als Eingangsdatum bzw. Eingangsdaten für ein in einer Simulationsumgebung gemäß der vorliegenden Beschreibung ablaufendes Simulationsprogramm gemäß der vorliegenden Beschreibung ausgebildet und eingerichtet sein.

Ergebnis oder Ergebnisse einer derart ausgebildeten Bearbeitung oder Weiterverarbeitung des mindestens einen Sensorwerts und/oder der mindestens einen Steuergröße können dann z.B. im Rahmen des Ablaufs des Simulationsprogramms erzeugte ein oder mehrere Werte sein, die dann z.B. weiter dem ML-Modell zugeführt werden können - insbesondere dem ML-Modell als Eingangsgröße zugeführt werden können. Solche im Rahmen des Ablaufs des Simulationsprogramms erzeugte ein oder mehrere Werte können beispielsweise Ausgangswerte vom im Rahmen der Simulation simulierten sogenannten virtuellen Sensoren (werden auch als sogenannte "Soft-Sensoren" bezeichnet) ausgebildet und eingerichtet sein. Beispiele für einen solchen Soft-Sensor können beispielsweise ein virtueller Drucksensor, ein virtueller Dampfsensor, ein virtueller Temperatursensor und/oder ein virtueller Sensor zur Messung eines Material- oder Energieflusses sein.

Die genannte Simulation kann dabei beispielsweise derart ausgebildet und eingerichtet sein, dass sie parallel einem in der Reifenheiz-Pressvorrichtung ablaufenden Vulkanisiervorgang, oder Teilen davon, abläuft.

Weiterhin kann vorgesehen sein, dass der der Auswerteeinrichtung zugeführte mindestens eine Sensorwert und/oder die der Auswerteeinrichtung zugeführte mindestens eine Steuergröße als eine Eingangsgröße für eine Simulation - z.B. eine Simulation gemäß der vorliegenden Beschreibung - verwendet wird.

Weiterhin kann vorgesehen sein, dass ein oder mehrere von einer Simulation, insbesondere einer Simulation gemäß der vorliegenden Beschreibung, erzeugte Werte als Eingangsgröße für das ML-Modell verwendet werden. So kann zum Beispiel vorgesehen sein, dass innerhalb einer solchen Simulation ein oder mehrere sogenannte "Soft-Sensoren" definiert werden und dann im Rahmen des Ablaufs der Simulation entsprechende Soft-Sensorwerte berechnet und ausgegeben werden. Dabei kann weiterhin vorgesehen sein, dass solche Soft-Sensorwerte von einem oder mehreren solcher Soft-Sensoren als Eingangsgrößen für das ML-Modell verwendet werden. Beispiele für einen Soft-Sensor können beispielsweise ein virtueller Drucksensor, ein virtueller Dampfsensor, ein virtueller Temperatursensor und/oder ein virtueller Sensor zur Messung eines Material- oder Energieflusses sein.

Auf diese Weise wird eine weiterhin vorteilhafte Ausgestaltung erreicht, da durch die Verwendung solcher virtueller Sensoren eine Vielzahl von Sensoren z.B. für das ML-Modell erzeugt und verwendet werden können bzw. verwendet werden, ohne dass die Reifenheiz-Pressvorrichtung konstruktiv und apparativ erweitert werden muss.

Unter einem maschinellen Lernverfahren wird beispielsweise ein automatisiertes ("maschinelles") Verfahren verstanden, welches Ergebnisse nicht durch im Vorhinein festgelegte Regeln generiert, sondern bei welchem vermittels eines maschinellen Lernalgorithmus oder Lernverfahrens aus vielen Beispielen (in der Regel automatisch) Regelmäßigkeiten identifiziert werden auf deren Basis dann Aussagen über zu analysierende Daten erzeugt werden.

Solche maschinellen Lernverfahren können beispielsweise als ein überwachtes Lernverfahren, ein teilüberwachtes Lernverfahren, ein unüberwachtes Lernverfahren oder auch ein bestärkendes Lernverfahren ("Reinforcement Learning") ausgebildet und eingerichtet sein.

Beispiele für maschinelle Lernverfahren sind z.B. Regressions-Algorithmen (z.B. lineare Regressionsalgorithmen), eine Erzeugung oder Optimierung von Entscheidungsbäumen (sogenannte "Decision Trees"), Lernverfahren für neuronale Netze, Clustering-Verfahren (z.B. ein sogenanntes "k-means-Clustering"), Lernverfahren für oder Erzeugung von Stützvektormaschinen ("Support Vector Machines" (SVM)), Lernverfahren für oder Erzeugung von sequentiellen Entscheidungsmodellen oder Lernverfahren für oder Erzeugung von Bayessche Modellen oder Netzen.

Das Ergebnis einer solchen Anwendung eines solchen maschinellen Lernalgorithmus oder Lernverfahrens auf bestimmte Daten wird, insbesondere in der vorliegenden Beschreibung, als "Machine-Learning"-Modell oder ML-Modell bezeichnet. Ein solche ML-Modell stellt dabei das digital gespeicherte oder speicherbare Ergebnis der Anwendung des maschinellen Lernalgorithmus oder Lernverfahrens auf die analysierten Daten dar.

Dabei kann die Erzeugung des ML-Modells derart ausgebildet und eingerichtet sein, dass das ML-Modell durch die Anwendung des maschinellen Lernverfahrens neu gebildet wird oder ein bereits bestehendes ML-Modell durch die Anwendung des maschinellen Lernverfahrens verändert oder angepasst wird.

Beispiele für solche ML-Modelle sind Ergebnisse von Regressions-Alogrithmen (z.B. eines linearen Regressions-Algorithmus), Neuronale Netze ("Neural Networks"), Entscheidungsbäume ("Decision Tree"), die Ergebnisse von Clustering-Verfahren (inklusive z.B. die erhaltenen Cluster oder Cluster-Kategorien, -Definitionen und/oder -Parameter), Stützvektormaschinen ("Support Vector Machines" (SVM)), sequentielle Entscheidungsmodelle oder Bayessche Modelle oder Netze.

Neuronale Netze können dabei z.B. sogenannte "Deep Neural Networks", "Feed Forward Neural Networks", "Recurrent Neural Networks"; "Convolutional Neural Networks" oder "Autoencoder-Neural-Networks" sein. Dabei wird die Anwendung entsprechender maschineller Lernverfahren auf neuronale Netze häufig auch als "Training" des entsprechenden Neuronalen Netzes bezeichnet.

Entscheidungsbäume können beispielsweise als sogenannte "iterative Dichotomizer 3" (ID3), Klassifikations- oder Regressionsbäume (CART) oder auch sogenannte "Random Forests" ausgebildet und eingerichtet sein.

Unter einem neuronalen Netz wird, zumindest im Zusammenhang mit der vorliegenden Beschreibung, eine elektronische Einrichtung verstanden, welche ein Netzwerk sogenannter Knoten umfasst, wobei in der Regel jeder Knoten mit mehreren anderen Knoten verbunden ist. Die Knoten werden beispielsweise auch als Neuronen, Units oder Einheiten bezeichnet. Dabei hat jeder Knoten mindestens eine Eingangs- und eine Ausgangsverbindung. Als Eingangs-Knoten für ein neuronales Netz werden solche Knoten verstanden, welche von der Außenwelt Signale (Daten, Reize, Muster oder ähnliches) empfangen können. Unter Ausgabe-Knoten eines neuronalen Netzes werden solche Knoten verstanden, welche Signale, Daten oder ähnliches an die Außenwelt weitergeben können. Unter sogenannten "versteckten Knoten" ("hidden nodes") werden solche Knoten eines neuronalen Netzes verstanden, welche weder als Eingangs- noch als Ausgangs-Knoten ausgebildet sind.

Dabei kann das neuronale Netz beispielsweise als ein sogenanntes tiefes neuronales Netz ("deep neural network" (DNN)) ausgebildet sein. Ein solches "deep neural network" ist ein neuronales Netz, in welchem die Netzknoten in Schichten angeordnet sind (wobei die Schichten selbst ein-, zwei- oder auch höher-dimensional sein können). Ein tiefes neuronales Netz umfasst dabei mindestens eine oder zwei sogenannte verdeckte Schichten, welche nur Knoten umfassen, die nicht Eingangsknoten oder Ausgangsknoten sind. Das heißt, die verdeckten Schichten haben keine Verbindungen zu Eingangssignalen oder Ausgangssignalen.

Unter einem sogenannten "Deep Learning" wird dabei beispielsweise eine Klasse von maschinellen Lerntechniken verstanden, welche viele Schichten der nichtlinearen Informationsverarbeitung für die überwachte oder nicht-überwachte Merkmalsextraktion und -transformation sowie zur Musteranalyse und - klassifizierung ausnutzt. Im Rahmen eines solchen "Deep Learning" wird dabei in der Regel ein sogenanntes "Deep Neural Network", z.B. gemäß der vorliegenden Beschreibung, verwendet.

Das Neuronales Netz kann beispielsweise auch eine so genannte Autoencoder-Struktur aufweisen, welche im Verlauf der vorliegenden Beschreibung noch näher erläutert wird. Eine derartige Autoencoder-Struktur kann beispielsweise geeignet sein, um eine Dimensionalität der Daten zu reduzieren und beispielsweise so Ähnlichkeiten und Gemeinsamkeiten zu erkennen.

Ein Neuronales Netz kann beispielsweise auch als ein so genanntes Klassifizierungs-Netz ausgebildet sein, welches besonders dazu geeignet ist, Daten in Kategorien einzuteilen. Derartige Klassifizierungs-Netze werden beispielsweise in Zusammenhang mit Handschrift-Erkennung eingesetzt.

Eine weitere mögliche Struktur eines neuronalen Netzes kann beispielsweise die Ausgestaltung als so genanntes "Deep-Believe-Network" sein.

Ein neuronales Netz kann beispielsweise auch eine Kombination von mehreren der vorstehend genannten Strukturen aufweisen. So kann beispielsweise die Architektur des neuronalen Netzes eine Autoencoder-Struktur umfassen, um die Dimensionalität der Eingangsdaten zu reduzieren, welche dann weiterhin mit einer anderen Netzstruktur kombiniert werden kann, um beispielsweise Besonderheiten und/oder Anomalien innerhalb der datenreduzierten Dimensionalität zu erkennen bzw. die datenreduzierte Dimensionalität zu klassifizieren.

Die die einzelnen Knoten und deren Verbindungen beschreibenden Werte inklusive weiterer ein bestimmtes neuronale Netz beschreibende Werte können beispielsweise in einem das neuronale Netz beschreibenden Wertesatz gespeichert werden. Ein solcher Wertesatz stellt dann beispielsweise eine Ausgestaltung des neuronalen Netzes dar. Wird ein solcher Wertesatz nach einem Training des neuronalen Netzes gespeichert, so wird damit beispielsweise eine Ausgestaltung eines trainierten neuronalen Netzes gespeichert. So ist es beispielsweise möglich, in einem ersten Computersystem das neuronale Netz mit entsprechenden Trainingsdaten zu trainieren, den entsprechenden Wertesatz, welcher diesem neuronalen Netz zugeordnet ist, dann zu speichern und als Ausgestaltung des trainierten neuronalen Netzes in ein zweites System zu transferieren - und das trainierte neuronale Netz dann dort z.B. anzuwenden.

Ein neuronales Netz kann in der Regel trainiert werden, indem über verschiedenste bekannte Lernmethoden durch Eingabe von Eingangsdaten in das neuronale Netz und Analyse der dann entsprechenden Ausgangsdaten aus dem neuronalen Netz Parameterwerte für die einzelnen Knoten oder für deren Verbindungen ermittelt werden. Auf diese Weise kann ein neuronales Netz mit bekannten Daten, Mustern, Reizen oder Signalen auf an sich heute bekannte Weise trainiert werden, um das so trainierte Netz dann nachfolgend beispielsweise zur Analyse weiterer Daten verwenden zu können.

Allgemein wird unter dem Training des neuronalen Netzes verstanden, dass die Daten, mit welchen das neuronale Netz trainiert wird, im neuronalen Netz mithilfe eines oder mehrerer Trainings-Algorithmen verarbeitet werden, um so genannte Vorspannungswerte ("Bias"), Gewichtungswerte ("weights") und/oder Transferfunktionen ("Transfer Functions") der einzelnen Knoten des neuronalen Netzes bzw. der Verbindungen zwischen jeweils zwei Knoten innerhalb des neuronalen Netzes zu berechnen bzw. zu verändern.

Zum Training eines neuronalen Netzes, z.B. gemäß der vorliegenden Beschreibung, kann beispielsweise eine der Methoden des so genannten "überwachten Lernens" ("supervised learning") verwendet werden. Hierbei werden einem Netz durch Training mit entsprechenden Trainingsdaten diesen Daten jeweils zugeordnete Ergebnisse oder Fähigkeiten antrainiert. Weiterhin kann zum Training des neuronalen Netzes auch eine Methode des so genannten unüberwachten Trainings ("unsupervised learning") verwendet werden. Ein solcher Algorithmus erzeugt für eine gegebene Menge von Eingaben beispielsweise ein Modell, welches die Eingaben beschreibt und daraus Vorhersagen ermöglicht. Dabei gibt es beispielsweise Clustering-Verfahren, mit welchen sich die Daten in verschiedene Kategorien einteilen lassen, wenn sie sich beispielsweise durch charakteristische Muster voneinander unterscheiden.

Beim Trainieren eines neuronalen Netzes können auch überwachte und unüberwachte Lernmethoden kombiniert werden, beispielsweise wenn Teilen der Daten antrainierbare Eigenschaften oder Fähigkeiten zugeordnet sind, während dies bei einem anderen Teil der Daten nicht der Fall ist.

Weiterhin können auch noch Methoden des so genannten bestärkenden Lernens ("reinforcement learning") für das Training des neuronalen Netzes, zumindest unter anderem, verwendet werden.

Beispielsweise kann ein Training, welches eine relativ hohe Rechenleistung eines entsprechenden Computers erfordert, auf einem hochperformanten System geschehen, während weitere Arbeiten oder Datenanalysen mit dem trainierten neuronalen Netz dann durchaus auf einem niedriger-performanten System durchgeführt werden kann. Solche weiteren Arbeiten und/oder Datenanalysen mit dem trainierten neuronalen Netz können zum Beispiel auf einem Assistenzsystem und/oder auf einer Steuereinrichtung, einer Speicherprogrammierbaren Steuerung oder einer modularen Speicherprogrammierbaren Steuerung oder weiteren entsprechenden Einrichtungen gemäß der vorliegenden Beschreibung erfolgen.

Unter einem Defekt wird im Rahmen der vorliegenden Beschreibung insbesondere jede fehlerhafte Funktionalität eines Geräts oder einer Einrichtung, hier der Reifenheiz Presse, verstanden. Insbesondere wird ein Defekt als eine derart fehlerhafte Funktionalität betrachtet, welche zu einer fehlerhaften Produktausgestaltung, einer unüblichen Abnutzung oder auch einer Schädigung des Geräts oder der Einrichtung bzw. von deren Komponenten nach sich zieht.

Unter einer Anomalie wird im Rahmen der vorliegenden Beschreibung beispielsweise verstanden, dass sich ein entsprechendes Gerät oder eine entsprechende Einrichtung nicht wie vorgesehen verhält. Dabei muss das vorliegender einer Anomalie nicht zwangsläufig zu Fehlern bei einem hergestellten Produkt führen, hier beispielsweise ein durch die Reifenheizpresse hergestelltes Produkt, sondern kann beispielsweise ein Verhalten der Einrichtung oder des Geräts sein, welche so beim Einrichten und Planen des Geräts oder der Einrichtung nicht vorgesehen war. Da solche Anomalien möglicherweise zu einem nicht vorhersehbaren Verhalten des Geräts oder der Einrichtung führen, was wiederum beispielsweise zu Schäden am Gerät, Zerstörung oder auch Gefährdung von Menschen und Material führen kann, ist auch das Erkennen solche Anomalien für einen sicheren Betrieb eines Geräts oder einer Einrichtung hilfreich oder oft sogar erforderlich.

Dass ein Defekt oder eine Anomalie in absehbarer Zeit bevorsteht, kann beispielsweise derart ausgebildet und eingerichtet sein, dass der mit "in absehbarer Zeit" erfasste Zeitraum derjenige Zeitraum ist, welcher zumindest im Wesentlichen für die Organisation einer Beseitigung für die Ursachen des Defekts oder der Anomalie sowie die Ermittlung und Bestimmung der Ursachen benötigt wird bzw. werden könnte. Weiterhin kann der mit "in absehbarer Zeit" erfasste Zeitraum auch derjenige Zeitraum sein, welcher für die Planung einer entsprechenden Beratungsarbeit zur Beseitigung von Ursachen und/oder des Defekts oder der Anomalie notwendig ist oder sein könnte. Der mit "in absehbarer Zeit" erfasste Zeitraum kann weiterhin auch ein Zeitraum bis zur nächsten geplanten Wartungsperiode oder zum nächsten geplanten Wartungszeitraum sein. Zudem kann der mit "in absehbarer Zeit" erfasste Zeitraum auch mehrere der vorstehend genannten Zeiträume umfassen.

Die Warnmeldung kann z.B. eine Information über eine erkannte Anomalie sowie erkannte mögliche Defekte und/oder Störungen, oder auch eine Information über möglicherweise bevorstehende Anomalien, Defekte und/oder Störungen umfassen. Weiterhin kann die Warnmeldung auch Informationen über mögliche Ursachen des erkannten Defekts und/oder der erkannten Anomalie sowie Möglichkeiten zur Ermittlung derartiger Ursachen umfassen. Weiterhin kann eine derartige Warnmeldung auch Informationen über für eine entsprechende Wartung oder Beseitigung von Ursachen möglicher Defekte zuständige Person, einen entsprechenden Personenkreis oder auch eine entsprechende Service-Einrichtung mit entsprechenden Kontaktdaten wie beispielsweise Adressen, Telefonnummern, E-Mail-Adressen usw. umfassen.

Dass die Auswerteeinrichtung bzw. die Auswerteeinrichtung unter Verwendung des ML-Modells eine Warnmeldung ausgibt, wenn die Auswertung des mindestens einen Sensorwerts und/oder der mindestens einen Steuergröße das Vorliegen eines Defekts oder einer Anomalie ergibt, oder das Bevorstehen eines Defekts oder eine Anomalie in absehbarer Zeit ergibt, kann wie nachfolgend erläutert ausgebildet und eingerichtet sein.

Im Falle der Ausgestaltung des ML-Modells als Neuronales Netz kann beispielsweise vorgesehen sein, dass nach Eingabe des mindestens einen Sensorwerts und/oder der mindestens einen Steuergröße in das neuronale Netz beispielsweise eine entsprechende Information vom neuronalen Netz ausgegeben wird, die, gegebenenfalls nach weiteren Auswerteschritten durch die Auswerteeinrichtung, das Ausgeben einer entsprechenden Warnmeldung anzeigt.

Dabei kann das neuronale Netz beispielsweise mit einem Verfahren des überwachten Lernens mit entsprechenden Sensorwerten und/oder Steuergrößen und bekannten Zuständen der Reifenheiz-Pressvorrichtung und/oder eines Heizbalgs der Reifenheiz-Pressvorrichtung trainiert worden sein. Dies wird nachfolgend in der Beschreibung noch näher erläutert. In diesem Fall kann die Auswerteeinrichtung derart ausgebildet und eingerichtet sein, dass vom neuronalen Netz beispielsweise durch eine entsprechende Ausgangs-Knoten-Schicht des neuronalen Netzes eine Information ausgegeben wird, durch welche das Ausgeben einer entsprechenden Warnmeldung angezeigt wird.

Weiterhin kann das neuronale Netz auch mit Verfahren des unüberwachten Lernens mit entsprechenden Sensorwerten und/oder Steuergrößen trainiert worden sein. Auch dies wird nachfolgend noch näher erläutert. Wird in einem solchen Fall beispielsweise ein neuronales Netz mit einer sogenannten Auto-Encoder-Strukturen verwendet, wie sie in der weiteren Beschreibung noch näher erläutert wird, so kann beispielsweise vorgesehen sein, dass anhand von Änderungen in einer sogenannten Code-Knoten-Schicht des Auto-Encoders (wie im nachstehenden Text noch näher erläutert) die Ausgabe einer entsprechenden Warnmeldung angezeigt wird.

Bei der Verwendung weiterer Ausgestaltungen für das ML-Modell, wie sie im nachfolgenden Text noch näher erläutert werden, kann der Ablauf zum Anzeigen der Ausgabe einer Warnmeldung unter Verwendung des ML-Modells auf vergleichbare Weise realisiert sein.

In einer vorteilhaften Ausgestaltung kann die Reifenheiz-Pressvorrichtung einen elastischen Heizbalg umfassen, der zur Unterstützung eines Vulkanisiervorgangs eines in der Reifenheiz-Pressvorrichtung befindlichen Fahrzeugreifens ausgebildet und eingerichtet ist.

Dabei kann die Reifenheiz-Pressvorrichtung mit dem Heizbalg derart ausgebildet und eingerichtet sein, sie zur Unterstützung eines Vulkanisiervorgangs eines in der Reifenheiz-Pressvorrichtung befindlichen Fahrzeugreifens unter Verwendung eines dem Heizbalg zugeführten oder zuführbaren Gases oder einer dem Heizbalg zugeführten oder zuführbaren Flüssigkeit ausgebildet und eingerichtet ist.

Weiterhin kann vorgesehen sein, dass zur Unterstützung des Vulkanisiervorgangs eines in der Reifenheiz-Pressvorrichtung befindlichen Fahrzeugreifens dem Heizbalg ein heißes oder erhitztes Gas oder eine heiße oder erhitzte Flüssigkeit zuführbar ist oder zugeführt wird.

Der Heizbalg (im Englischen z.B. auch als "Bladder" oder "Tire Curing Bladder" bezeichnet) ist als eine elastische Blase (z.B. aus Gummi oder einem vergleichbaren Material) ausgebildet und eingerichtet, die vermittels Zufuhr eines Gases oder einer Flüssigkeit aufgepumpt bzw. expandiert, und vermittels Ablassen und/oder Absaugen von darin enthaltenem Gas oder von darin enthaltener Flüssigkeit entspannt werden kann. Dabei kann der Heizbalg beispielsweise derart ausgebildet und eingerichtet sein, dass er beim Befüllen mit einem Gas oder einer Flüssigkeit expandierbar ist bzw. expandiert, und beim Entleeren wieder entsprechend kontrahiert bzw. kontrahierbar ist.

Dabei kann der Heizbalg z.B. weiterhin derart ausgebildet und eingerichtet sein, dass das zuführbare oder zugeführte Gas bzw. die zugeführte oder zuführbare Flüssigkeit beispielsweise Temperaturen von bis zu 150 Grad Celsius, vorteilhafterweise von bis zu 200 Grad Celsius und weiterhin vorteilhafterweise bis zu 250 Grad Celsius aufweisen kann.

Der Heizbalg kann weiterhin derart ausgebildet und eingerichtet sein, dass als Gase beispielsweise Luft, Wasserdampf, Stickstoff und/oder weitere Gase - u.a. auch mit den o.g. Temperaturen - zugeführt werden können. Als Flüssigkeit wird z.B. häufig Wasser verwendet.

Der Heizbalg kann dabei derart ausgebildet und eingerichtet sein, dass er, zumindest wenn er innerhalb eines Reifenrohlings befindlich ist, einem Druck von bis zu 30 bar oder mehr, oder auch einem Unterdruck bis zu -1 bar, widerstehen kann.

Eine besondere Rolle im Rahmen einer Überwachung eines Vulkanisiervorgangs in einer Reifenheiz-Pressvorrichtung spielt die Überwachung des Heizbalgs. So können beispielsweise Risse und/oder Lecks im Material des Heizbalg dazu führen, dass heißes Gas oder heiße Flüssigkeit in den Zwischenraum zwischen Heizbalg und Reifenrohling eintritt und dazu führt, dass der erzeugte Fahrzeugreifen dann fehlerhaft wird und/oder eine verminderte Qualität aufweist. Wird ein solcher Riss oder Defekt im Heizbalg beispielsweise zu spät erkannt, kann dies dazu führen, dass auch eine größere Menge an Fahrzeugreifen mit verminderter Qualität oder sogar an unbrauchbaren Fahrzeugreifen in der Reifenheiz-Pressvorrichtung erzeugt wird.

Daher ist es vorteilhaft, derartige Schäden in einem Heizbalg frühzeitig zu erkennen, oder, besser noch, bereits vor Eintritt des eigentlichen Defekts festzustellen, dass eine solche Schädigung in naher Zukunft auftreten könnte. Dies kann beispielsweise erfolgen, indem man beispielsweise bereits entsprechende Vorläufer eines solches Defektes, beispielsweise entsprechende Mikrorisse, erkennt.

Weiterhin kann die Auswerteeinrichtung und/oder das ML-Modell derart ausgebildet und eingerichtet sein, dass eine Warnmeldung ausgegeben wird, wenn eine Auswertung des mindestens einen Sensorwerts oder der mindestens einen Steuergröße durch die Auswerteeinrichtung ergibt,
- dass eine Anomalie oder ein Defekt des Heizbalgs vorliegt,
- oder dass eine Anomalie oder ein Defekt des Heizbalgs in absehbarer Zeit bevorsteht.,
Dabei kann die Auswertung des mindestens einen Sensorwerts oder der mindestens einen Steuergröße durch die Auswerteeinrichtung vorteilhafterweise unter Verwendung des ML-Modells erfolgen.

In dieser vorteilhaften Ausgestaltung kann beispielsweise vorgesehen sein, dass das Verfahren derart ausgebildet und eingerichtet ist, dass eine Warnmeldung ausgegeben wird, wenn eine Auswertung des mindestens einen Sensorwerts oder der mindestens einen Steuergröße durch die Auswerteeinrichtung unter Verwendung des ML-Modells ergibt, dass der Heizbalg fehlerhaft ist oder dass ein Defekt des Heizbalgs in absehbarer Zeit bevorsteht.

Daher wird die vorstehend genannte Aufgabe auch gelöst durch ein Verfahren zur Überwachung eines Vulkanisiervorgangs eines Fahrzeugreifens in einer Reifenheiz-Pressvorrichtung mit einem elastischen Heizbalg, wobei der elastische Heizbalg zur Unterstützung eines Vulkanisiervorgangs eines in der Reifenheiz-Pressvorrichtung befindlichen Fahrzeugreifens ausgebildet und eingerichtet ist. Im Rahmen dieses Verfahrens wird mindestens ein Sensorwert und/oder mindestens eine Steuergrö-ße der Reifenheiz-Pressvorrichtung erfasst,
wobei der mindestens eine Sensorwert und/oder die mindestens eine Steuergröße einer Auswerteeinrichtung zur Auswertung zugeführt wird,
wobei die Auswerteeinrichtung ein vermittels eines maschinellen Lernverfahrens eingerichtetes ML-Modell umfasst,
und wobei die Auswerteeinrichtung und/oder das ML-Modell eine Warnmeldung ausgibt, wenn eine Auswertung des mindestens einen Sensorwerts oder der mindestens einen Steuergröße durch die Auswerteeinrichtung unter Verwendung des ML-Modells ergibt,
   - dass eine Anomalie oder ein Defekt des Heizbalgs vorliegt,
   - oder dass eine Anomalie oder ein Defekt des Heizbalgs in absehbarer Zeit bevorsteht.

Da der Heizbalg zu den Verschleißteilen einer Reifenheiz-Pressvorrichtung zählt und daher relativ regelmäßig von entsprechenden Anomalien und Defekten betroffen ist, lassen sich mit dieser Ausgestaltung besonders effizient eine Prozesskontrolle oder Anlagenüberwachung für eine Reifenheiz-Pressvorrichtung einrichten. Weiterhin ist eine ordnungsgemäße Funktionalität des Heizbalg wichtig für die Qualität des hergestellten Fahrzeugreifens sowie auch für einen entsprechende ressourcenschonenden Betrieb der Reifenheiz-Pressvorrichtung.

Ein Defekt bzw. eine Anomalie des Heizbalg, bzw. ein sich ankündigender Defekt bzw. eine sich ankündigende Anomalie des Heizbalgs, kann sich in verschiedenartigsten Parametern bzw. zeitlichen Parameterverläufen der Reifenheiz-Pressvorrichtung äußern, wobei jeder der entsprechenden Parameter sich gegebenenfalls auch aus auch anderen Gründen unnormal verhalten kann.

Daher kann häufig erst aus einer bestimmten Kombination bestimmter Parameter oder bestimmter Veränderungen von Parametern der Reifenheiz-Pressvorrichtung auf eine sich ankündigende Anomalie oder einen sich ankündigenden Defekt des Heizbalg geschlossen werden. Da solche Zusammenhänge häufig relativ komplex und analytisch schwer zu erfassen sind, kann hier vorteilhafterweise durch die Verwendung eines ML-Modells der Aufwand zur Erkennung solcher Defekte und Anomalien, bzw. sich ankündigen der Effekte und Anomalien, reduziert werden.

Das Verfahren kann dabei derart ausgebildet und eingerichtet sein,
dass alle Sensorwerte des mindestens einen Sensorwerts von solchen Sensoren der Reifenheiz-Pressvorrichtung geliefert werden, die auch für einen vorgesehenen Vulkanisiervorgang eines Fahrzeugreifens in der Reifenheiz-Pressvorrichtung erforderlich sind und/oder verwendet werden.

Es ist ein Vorteil dieser Ausgestaltung, dass für den Betrieb der Auswerteeinrichtung bzw. der Erkennung, ob ein Defekt oder eine Anomalie vorliegt bzw. in absehbarer Zeit bevorsteht keine gesonderten apparativen Vorkehrungen im Rahmen der Sensorik getroffen werden müssen, sondern ausschließlich Sensoren verwendet werden, welche für eine entsprechende Produktion von Fahrzeuggreifen mit vorgesehener Qualität sowieso vorgesehen sind.

Diese Weise kann der apparative und/oder konstruktive Aufwand zur Realisierung einer Anlagenüberwachung bzw. Prozesskontrolle für die Reifenheiz-Pressvorrichtung weiter reduziert werden.

Ein Sensor ist z.B. für einen vorgesehenen Vulkanisiervorgang erforderlich, wenn er im Rahmen des Vulkanisiervorgangs benötigt wird, um Reifen einer vorgegebenen Qualität zu produzieren. Solche "erforderlichen" Sensoren sind nicht ausschließlich für z.B. vorausschauenden Wartung (Predictive Maintenance) oder Feststellung von Anlagendefekten oder Verschleiß der Anlage, bzw. Komponenten davon, vorgesehen. Weiterhin können "erforderliche" Sensoren auch solche sein, die nicht ausschließliche zur Verwendung mit einer Auswerteeinrichtung gemäß der vorliegenden Beschreibung vorgesehen sind.

Sensoren werden z.B. für einen vorgesehenen Vulkanisiervorgang verwendet, wenn sie im Rahmen des Ablaufs eines Vulkanisiervorgangs eines Fahrzeugreifens verwendet werden, um Reifen einer vorgegebenen oder vorgebbaren Qualität zu produzieren. Solche "verwendeten" Sensoren nicht ausschließlich für z.B. vorausschauenden Wartung (Predictive Maintenance) oder Feststellung von Anlagendefekten oder Verschleiß der Anlage bzw. Komponenten davon vorgesehen. Weiterhin können "verwendete" Sensoren auch solche sein, die nicht ausschließliche zur Verwendung mit einer Auswerteeinrichtung gemäß der vorliegenden Beschreibung vorgesehen sind.

Dass die Sensoren für einen vorgesehenen Vulkanisiervorgang eines Fahrzeugreifens in der Reifenheiz-Pressvorrichtung erforderlich sind oder verwendet werden, kann zum Beispiel bedeuten, dass die entsprechenden Sensoren auch vorhanden wären, wenn keine Auswerteeinrichtung gemäß der vorliegenden Erfindung - oder eine mit der Auswerteeinrichtung vergleichbare Einrichtung - in der Reifenheiz-Pressvorrichtung vorgesehen wäre.

Dass die Sensoren für einen vorgesehenen Vulkanisiervorgang eines Fahrzeugreifens in der Reifenheiz-Pressvorrichtung erforderlich sind oder verwendet werden, kann zum Beispiel auch bedeuten, dass die entsprechenden Sensoren auch vorhanden wären, wenn die Reifenheiz-Pressvorrichtung ausschließlich zum Vulkanisieren von Fahrzeugreifen ausgebildet und eingerichtet wäre, und nicht dafür, weiterhin Verfahren zur Anlagenüberwachung, zur vorausschauenden Wartung (Predictive Maintenance), zur Qualitätskontrolle auszuführen oder zu unterstützen und/oder unter weiterhin eine Auswerteeinrichtung gemäß der vorliegenden Beschreibung zu betreiben oder zu unterstützen.

Weiterhin kann ein Verfahren gemäß der vorliegenden Beschreibung derart ausgebildet und eingerichtet sein, dass die Reifenheiz-Pressvorrichtung eine Steuereinrichtung zur Steuerung des Vulkanisiervorgangs umfasst, und dass mindestens eine der mindestens einen Steuergröße eine von der Steuereinrichtung im Rahmen des Vulkanisiervorgangs ausgegebene Ansteuergröße für die Reifenheiz-Pressvorrichtung oder eine Komponente der Reifenheiz-Pressvorrichtung umfasst.

Durch die Verwendung einer entsprechenden Ansteuergröße für die Reifenheiz-Pressvorrichtung im Rahmen eines Verfahrens gemäß der vorliegenden Beschreibung kann der operative bzw. konstruktive Aufwand zur Realisierung der Anlagenüberwachung bzw. Prozesskontrolle reduziert werden, da derartige Ansteuergrößen schon allein für den Betrieb der entsprechenden Reifenheiz-Pressvorrichtung erforderlich sind.

Die Ansteuergröße für die Reifenheiz-Pressvorrichtung kann dabei jede von einem Controller oder einer Steuerung an die Reifenheiz-Pressvorrichtung bzw. eine Komponente von davon gesendete elektrische oder elektronische Steuergröße sein. Insbesondere kann die Ansteuergröße jede elektrische oder elektronische Steuergröße sein, die im Rahmen eines Vulkanisier-Vorgangs eines Fahrzeugreifens innerhalb der Reifenheiz-Pressvorrichtung von einem Controller oder eine Steuerung an die Reifenheiz-Pressvorrichtung oder eine Komponente davon übertragen wird. Dabei kann die Ansteuergröße insbesondere beispielsweise an einen Aktor der Reifenheiz-Pressvorrichtung gesendet werden.

Eine elektrische Steuergröße kann beispielsweise ein analoges Signal sein, beispielsweise ein entsprechender Impuls, eine Spannungsstufe, ein Signal einer bestimmten Frequenz oder auch ein moduliertes Signal einer bestimmten Frequenz oder ein vergleichbares Signal. Eine elektronische Steuergröße kann jede Art von digitaler Information sein, beispielsweise eine oder mehrere digitale Größen oder auch eine digitale Nachricht.

Das Verfahren, bzw. eine Reifenheiz-Pressvorrichtung gemäß der vorliegenden Beschreibung, kann weiterhin derart ausgebildet und eingerichtet sein, dass die Reifenheiz-Pressvorrichtung einen Drucksensor umfasst, und dass mindestens einer des mindestens einen Sensorwerts von dem Drucksensor geliefert wird,
und/oder
dass die Reifenheiz-Pressvorrichtung einen Temperatursensor umfasst, und dass mindestens einer des mindestens einen Sensorwerts von dem Temperatursensor geliefert wird.

Temperatursensoren können dabei jede Art von Sensoren sein, welche eine Temperatur innerhalb der Reifenheiz-Pressvorrichtung bzw. von einer oder mehreren Komponenten der Reifenheiz-Pressvorrichtung messen und beispielsweise ein eine Steuereinrichtung der Reifenheiz-Pressvorrichtung und/oder an die Auswerteeinrichtung übertragen. Dabei kann beispielsweise eine Temperatur einer Komponente der Reifenheiz-Pressvorrichtung bzw. auch eines Prozessgases oder einer Prozessflüssigkeit bzw. eines anderen Prozess-Stoffs gemessen werden. Weiterhin kann z.B. auch eine Temperatur des zu vulkanisierenden oder vulkanisierten Fahrzeugreifens bzw. des Fahrzeugreifens während des Vulkanisiervorgangs gemessen werden.

Drucksensoren können dabei jede Art von Sensoren sein, welche einen Druck innerhalb der Reifenheiz-Pressvorrichtung, bzw. innerhalb einer oder mehrerer Komponenten der Reifenheiz-Pressvorrichtung, messen und beispielsweise an eine Steuereinrichtung der Reifenheiz-Pressvorrichtung und/oder an die Auswerteeinrichtung übertragen. Dabei kann beispielsweise der Druck eines Prozessgases oder einer Prozessflüssigkeit bzw. eines anderen Prozess-Stoffs gemessen werden. Beispielsweise kann durch den Drucksensor der Druck innerhalb einer Zufuhr- oder Ablass-Leitung der Reifenheiz-Pressvorrichtung gemessen werden, z.B. einer Zufuhr- oder Ablass-Leitung für im Rahmen eines Vulkanisiervorgangs verwendete Prozessstoffe. In einer bevorzugten Ausgestaltung kann durch den Drucksensor beispielsweise auch der Druck in einem Heizbalg der Reifenheiz-Pressvorrichtung gemessen werden.

Weiterhin kann ein Verfahren gemäß der vorliegenden Beschreibung und/oder eine Reifenheiz-Pressvorrichtung gemäß der vorliegenden Beschreibung derart ausgebildet und eingerichtet sein, dass die Reifenheiz-Pressvorrichtung mindestens ein Zufuhrventil zur Regelung der Zufuhr eines Gases oder einer Flüssigkeit zu dem Heizbalg sowie mindestens ein Ablassventil zur Regelung des Abtransports des Gases oder der Flüssigkeit aus dem Heizbalg umfasst, und
dass mindestens einer des mindestens einen Sensorwerts von einem Stellungssensor des mindestens einen Zufuhrventils geliefert wird und/oder von einem Stellungssensor des mindestens einen Ablassventils geliefert wird,
   und/oder
dass mindestens eine der mindestens einen Steuergröße eine Ansteuergröße für das mindestens eine Zufuhrventil umfasst und/oder eine Ansteuergröße für das mindestens eine Ablassventil umfasst.

Dabei kann das Zufuhrventil und/oder das Ablassventil beispielsweise zwei Zustände, insbesondere genau zwei Zustände aufweisen - ein Absperrzustand, bei dem ein Durchfluss eines Prozessstoffs durch das Ventil verhindert ist und ein Durchfluss-Zustand, bei welchem der Prozessstoff vom Ventil durchgelassen wird. Weiterhin kann das Zufuhr- und/oder Ablassventil auch derart ausgebildet und eingerichtet sein, dass durch sie ein Durchfluss von entsprechenden Prozessstoffen kontinuierlich einstellbar ist.

Ein jedes der genannten Ventile kann beispielsweise einen Stellungssensor aufweisen, anhand dessen Signal beispielsweise der Öffnungs- bzw. Durchfluss-Zustand des Ventils bestimmbar ist. Ein solcher Stellungssensor kann beispielsweise auf die verschiedensten Weisen realisiert sein, beispielsweise indem er die Position eines Verschlussmechanismus im Ventil registriert, indem er einen Durchfluss durch das Ventil registriert, indem er ein Einstellungssignal eines motorbetriebenen Verschlussmechanismus detektiert oder durch vergleichbare Mechanismen.

Die Ansteuergröße für das mindestens eine Zufuhr- bzw. das mindestens eine Ablassventil kann beispielsweise von einer Steuereinrichtung der Reifenheiz-Pressvorrichtung an eines der genannten Ventile übertragen werden, um den entsprechenden Ventilzustand einzustellen. Dies kann beispielsweise als Analog- und/oder Digitalsignal ausgebildet und eingerichtet sein, wie sie z.B. zu einer derartigen Steuerung typischerweise herangezogen werden.

Zum Befüllen des Heizbalgs mit entsprechenden Prozessstoffen kann in der Reifenheiz-Pressvorrichtung z.B. ein An-Aus-Ventil für ein heißes Gas (z.B. zwischen 110 und 180 Grad Celsius) unter relativ geringem Druck (z.B. zwischen 2 und 8 bar) vorgesehen sein sowie ein weiteres An-Aus-Ventil für die Zufuhr von heißem Gas (z.B. 190 bis 230 Grad Celsius) unter relativ hohem Druck (17 bis 30 bar). Dann kann z.B. weiterhin in der Gaszufuhr-Leitung für den Heizbalg zusätzlich den genannten An-Aus-Ventilen ein oder mehrere weitere Regelventile vorgesehen sein, mit welchem der zugeführte Gasstrom bzw. der Druck des zugeführten Gasstroms eingestellt werden kann.

Das Abführen von im elastischen Heizbalg befindlichen Prozessstoffen kann beispielsweise durch einen im Heizbalg herrschenden Überdruck und/oder auch durch ein Absaugen z.B. vermittels einer Pumpe erfolgen.

Zudem kann ein Verfahren gemäß der vorliegenden Beschreibung und/oder eine Reifenheiz-Pressvorrichtung gemäß der vorliegenden Beschreibung auch derart ausgebildet und eingerichtet sein, dass mindestens einer des mindestens einen Sensorwerts von einem Heizbalg-Drucksensor geliefert wird, der zur Messung eines Innendrucks im Heizbalg ausgebildet und eingerichtet ist,
und/oder
dass mindestens einer des mindestens einen Sensorwerts von einem Zufuhr-Drucksensor geliefert wird, der zur Messung eines Drucks in einer Zufuhr-Leitung für den Heizbalg ausgebildet und eingerichtet ist,
   und/oder
dass mindestens einer des mindestens einen Sensorwerts von einem Ablass-Drucksensor geliefert wird, der zur Messung eines Drucks in einer Ablass-Leitung für den Heizbalg ausgebildet und eingerichtet ist.

Solche Drucksensoren können alle für derartige Druckmessungen und die entsprechenden Arbeitsbedingungen in einer Reifenheiz-Pressvorrichtung geeigneten Drucksensoren sein.

Dabei können derartige Drucksensoren jede Art von Drucksensoren sein, welche für die in einer entsprechenden Reifenheiz-Pressvorrichtung vorliegenden Temperatur und Druckverhältnisse vorteilhaft eingesetzt werden können bzw. einsetzbar sind. Im Rahmen einer solchen Vorrichtung kann z.B. ein heißes Gas oder eine heiße Flüssigkeit (z.B. zwischen 110 und 180 Grad Celsius oder auch zwischen 190 bis 230 Grad Celsius) unter relativ geringem Druck (z.B. zwischen 2 und 8 bar) oder auch unter relativ hohem Druck (von 17 bis 30 bar) verwendet werden. Daher können beispielsweise Drucksensoren verwendet werden, welche beispielsweise für Temperaturen bis zu 250 °C und einen Druck bis zu 30 bar geeignet sind.

Die Drucksensoren können dabei an verschiedenen Stellen innerhalb der Medien-Versorgung des Heizbalgs oder auch im Heizbalg selbst vorgesehen sein.

In einer bevorzugten Ausgestaltung kann beispielsweise je ein Drucksensor in einer Zufuhrleitung, einer Ablassleitung sowie im Heizbalg selbst vorgesehen sein. Auf diese Weise kann beispielsweise ein gutes Bild von den Zuständen beim Auffüllen und Ablassen des Heizbalgs sowie im Arbeitszustand erfasst werden, was eine vorteilhafte Bestimmung von möglichen Problemen der Vorrichtung, der Medienversorgung und/oder des Heizbalgs ermöglichen kann.

Weiterhin kann ein Verfahren gemäß der vorliegenden Beschreibung und/oder eine Reifenheiz-Pressvorrichtung gemäß der vorliegenden Beschreibung derart ausgebildet und eingerichtet sein, dass mindestens einer des mindestens einen Sensorwerts von einem Heizbalg-Temperatursensor geliefert wird, der zur Messung einer Temperatur im Heizbalg ausgebildet und eingerichtet ist,
und/oder
dass mindestens einer des mindestens einen Sensorwerts von einem Zufuhr-Temperatursensor geliefert wird, der zur Messung einer Temperatur in einer Zufuhr-Leitung für den Heizbalg ausgebildet und eingerichtet ist,
   und/oder
dass mindestens einer des mindestens einen Sensorwerts von einem Ablass-Temperatursensor geliefert wird, der zur Messung einer Temperatur in einer Ablass-Leitung für den Heizbalg ausgebildet und eingerichtet ist.

In gleicher Weise können jeweils auch Temperatursensoren vorgesehen sein, die ebenfalls für die vorstehend genannten Druck- und/oder Temperaturverhältnisse in der Reifenheiz-Pressvorrichtung geeignet und vorgesehen sein können.

Auch die Temperatursensoren können in einer vorteilhaften Ausgestaltung beispielsweise in einer Zufuhrleitung, einer Ablassleitung sowie im Heizbalg der Reifenheiz-Pressvorrichtung vorgesehen sein, um ein möglichst umfassendes Bild von den Zuständen und Vorgängen im Rahmen eines Vulkanisiervorgangs für einen Fahrzeuggreifen erhalten zu können.

Weiterhin kann vorgesehen sein, dass das ML-Modell als ein neuronales Netz ausgebildet und eingerichtet ist, welches zumindest unter anderem mit Sensorwerten und/oder Steuergrößen gemäß der vorliegenden Beschreibung trainiert wurde.

Dabei können das ML Modell, das neuronale Netz und/oder das Training des neuronalen Netzes beispielsweise gemäß der vorliegenden Beschreibung ausgebildet und eingerichtet sein.

Insbesondere kann beispielsweise das Training des neuronalen Netzes als ein sogenanntes überwachtes Lernen ausgebildet und eingerichtet sein. Hierbei kann beispielsweise ein sogenanntes tiefes neuronales Netz verwendet werden. Als Lernverfahren kann beispielsweise ein "Deep Learning" Lernverfahren eingesetzt werden. Dabei können Trainingsdaten zum Training des neuronalen Netzes z.B. derart ausgebildet und eingerichtet sein, dass erfasste ein oder mehrere Sensorwerte von einem oder mehreren Sensoren und/oder ein oder mehrere Steuergrößen einem Zustand oder einer Kenngröße der Reifenheiz-Pressvorrichtung zugeordnet sind. Diese erfassten ein oder mehreren Sensorwerte und/oder ein oder mehreren Steuergrößen können beispielsweise zu einem bestimmten Zeitpunkt erfasst sein oder auch in einem bestimmten vorgegebenen oder vorgebbaren Zeitraum erfasst worden sein. Dies Zuordnen eines Zustands oder einer Kenngröße zu bestimmten ein oder mehreren Sensorwerten wird häufig als sogenanntes "Labeling" der Sensordaten bzw. Steuergrößen mit den genannten Daten bezeichnet. Weiterhin können ein oder mehreren Sensordaten und/oder ein oder mehrere Steuergrößen auch eine Kenngröße, eine Qualitäts-Kenngröße oder eine Beschreibungs-Größe des zu diesem Zeitpunkt gerade in der Reifenheiz-Pressvorrichtung befindlichen Fahrzeugreifens oder auch einer Kenngröße oder einem Zustand des Heizbalgs zugeordnet sein.

Weiterhin kann das überwachte Lernen beispielsweise auch derart ausgebildet und eingerichtet sein, dass Trainingsdaten derart gebildet werden, dass beispielsweise einer Zeitreihe von Sensorwerten eines bestimmten Sensors und/oder einer Zeitreihe von Werten einer bestimmten Steuergröße beispielsweise eine oder mehrere der vorstehend genannten Kenngrößen bzw. Daten zugeordnet sind. Auf vergleichbare Weise können auch Zeitreihen von Sensorwerten, welche von verschiedenen Sensoren stammen, und/oder Zeitreihen von Werten verschiedener Steuergrößen einem oder mehreren der vorstehend genannten Kenngrößen zugeordnet sein.

In dem Fall, in welchem die die Auswerteeinrichtung eine Simulationsumgebung umfasst, die zum Ablauf eines Simulationsprogramms zur Simulation der Reifenheiz-Pressvorrichtung, oder auch Teilen oder Komponenten der Reifenheiz-Pressvorrichtung, ausgebildet und eingerichtet ist, können zum Training eines neuronalen Netzes gemäß der vorliegenden Beschreibung zumindest unter anderem auch Sensorwerte von durch im Rahmen des Ablaufs des Simulationsprogramms simulierte ein oder mehrere Soft-Sensoren oder virtuelle Sensoren, z.B. gemäß der vorliegenden Beschreibung, verwendet werden.

Auch in dem Fall, in welchem die Auswerteeinrichtung eine Simulationsumgebung mit einem Simulationsprogramm zur Simulation der Reifenheiz-Pressvorrichtung, oder auch Teilen oder Komponenten der Reifenheiz-Pressvorrichtung, umfasst, können zum Training eines neuronalen Netzes gemäß der vorliegenden Beschreibung zumindest unter anderem auch Sensorwerte von durch im Rahmen des Ablaufs des Simulationsprogramms simulierte ein oder mehrere Soft-Sensoren oder virtuelle Sensoren, z.B. gemäß der vorliegenden Beschreibung, verwendet werden.

Dabei erfolgt eine derartige Verwendung von Soft-Sensor- oder virtuelle-Sensor-Werten jeweils analog der Verwendung von Werten von realen Sensoren der Reifenheiz-Pressvorrichtung zum Training eines neuronalen Netzes gemäß der vorliegenden Beschreibung.

Vermittels eines Trainings eines entsprechenden neuronalen Netzes mit einem oder mehreren der vorstehend genannten Trainingsdaten kann das neuronale Netz dann derart ausgebildet und eingerichtet werden, dass anhand von erfassten Daten von einem oder mehrerer der Sensoren der Reifenheiz-Pressvorrichtung ein Zustand der Reifenheiz-Pressvorrichtung, von Komponenten davon (z.B. dem Heizbalg), oder auch eines aktuell in der Reifenheiz-Pressvorrichtung befindlichen Fahrzeugreifens abgeleitet werden können. Dies kann beispielsweise derart ausgebildet und eingerichtet sein, dass die entsprechenden Sensorwerte als Eingangswerte das so trainierte neuronale Netz verwendet werden, und die genannten Kenngrößen dann Ausgangswerte des neuronalen Netzes darstellen oder entsprechend aus solchen Ausgangswerten abgeleitet werden.

In einer alternativen Ausgestaltung kann beispielsweise auch unter Verwendung eines unüberwachten Lernverfahrens mit derartigen Sensor- und/oder Steuergrößen beispielsweise ein neuronales Netz mit einer sogenannten Auto-Encoder-Struktur trainiert werden. Unter Verwendung dieses trainierten Auto-Encoders können dann beispielsweise verschiedene Zustände bezüglich der Reifenheiz-Pressvorrichtung bzw. des Produktionsvorgangs und/oder auch des bearbeiteten Fahrzeugreifens identifiziert werden. Aufgrund einer Auswertung dieser identifizierten Zustände können dann beispielsweise auch Fehlerfällen zugeordnete Zustände identifiziert werden. Auch sich anbahnenden Fehlerfällen oder Störungen zugeordnete Zustände können so erkannt werden.

Dadurch wird es beispielsweise möglich, den apparativen und/oder konstruktiven Aufwand zur Realisierung einer Anlagenüberwachung und/oder Prozesskontrolle für die Reifenheiz-Pressvorrichtung zu reduzieren, da das Verfahren beispielsweise derart ausgebildet und eingerichtet sein kann, dass ausschließlich Sensoren im Rahmen des vorstehend genannten Verfahrens verwendet werden, die sowieso in der Reifenheiz-Pressvorrichtung vorhanden sind - z.B. um beispielsweise ein ordnungsgemäßen Ablauf des Vulkanisier-Prozesses zu ermöglichen.

In einer vorteilhaften Ausgestaltung kann vorgesehen sein, dass das neuronale Netz eine Autoencoder-Struktur umfasst, welche mit einem Verfahren des unüberwachten Lernens zumindest unter anderem mit Sensorwerten und/oder Steuergrößen gemäß der vorliegenden Beschreibung trainiert wurde.

Weiterhin kann das neuronale Netz eine Deep Learning Architektur aufweisen und mit einem Verfahren des überwachten Lernens zumindest unter anderem mit Sensorwerten und/oder Steuergrößen gemäß der vorliegenden Beschreibung trainiert worden sein.

Das ML-Modell kann beispielsweise als eine Support-Vektor-Maschine, ein Gradient-Boosted-Tree-Modell oder ein Random-Forest-Modell ausgebildet und eingerichtet sein, welche jeweils zumindest unter anderem unter Verwendung von Sensorwerten und/oder Steuergrößen gemäß der vorliegenden Beschreibung eingerichtet wurden.

Dabei können das ML Modell, die Support-Vektor-Maschine, das Gradient-Boosted-Tree-Modell und/oder das Random-Forest-Modell beispielsweise gemäß der vorliegenden Beschreibung ausgebildet und eingerichtet sein. Auch das Einrichten der genannten ML-Modelle, wie auch das Vorbereiten der Daten als Trainingsdaten zum Einrichten der genannten ML-Modelle, können dabei beispielsweise gemäß der vorliegenden Beschreibung ausgebildet und eingerichtet. Dabei kann das Einrichten solcher ML-Modelle z.B. mit aus dem Stand der Technik hierfür bekannten Verfahren und Vorgehensweisen ausgebildet und eingerichtet sein.

Die vorstehend genannte Aufgabe wird weiterhin gelöst durch eine Auswerteeinrichtung zur Überwachung eines Vulkanisiervorgangs eines Fahrzeugreifens in einer Reifenheiz-Pressvorrichtung,
wobei die Reifenheiz-Pressvorrichtung zum Erfassen mindestens eines Sensorwerts und/oder mindestens einer Steuergröße der Reifenheiz-Pressvorrichtung ausgebildet und eingerichtet ist.

Dabei ist weiterhin vorgesehen, dass die Auswerteeinrichtung ein vermittels eines maschinellen Lernverfahrens eingerichtetes ML-Modell umfasst,
dass die Auswerteeinrichtung zum Empfang des mindestens einen Sensorwerts und/oder der mindestens einen Steuergröße ausgebildet und eingerichtet ist,
und dass die Auswerteeinrichtung und/oder das ML-Modell weiterhin derart ausgebildet und eingerichtet sind, dass eine Warnmeldung ausgegeben wird, wenn eine Auswertung des mindestens einen Sensorwerts und/oder der mindestens einen Steuergröße durch die Auswerteeinrichtung unter Verwendung des ML-Modells ergibt,
   - dass ein Defekt oder eine Anomalie der Reifenheiz-Pressvorrichtung oder zumindest ein Teil der Reifenheiz-Pressvorrichtung vorliegt,
   - oder dass ein Defekt oder eine Anomalie der Reifenheiz-Pressvorrichtung oder zumindest eines Teils der Reifenheiz-Pressvorrichtung in absehbarer Zeit bevorsteht.

Dabei kann beispielsweise die Auswerteeinrichtung, die Reifenheiz-Pressvorrichtung, der Vulkanisiervorgang eines Fahrzeugreifens, der Sensorwert, die Steuergröße, das maschinelle Lernverfahren, das ML-Modell, die Warnmeldung, der Defekt, die Anomalie oder auch das Bevorstehen eines Defekts oder einer Anomalie in absehbarer Zeit beispielsweise gemäß der vorliegenden Beschreibung ausgebildet und eingerichtet sein.

Wie im Rahmen der vorliegenden Beschreibung bereits erläutert, kann bei Verwendung einer Auswerteeinrichtung gemäß der vorstehenden Beschreibung der apparative und/oder konstruktive Aufwand zur Realisierung einer Anlagenüberwachung und/oder Prozesskontrolle für eine Reifenheiz-Pressvorrichtung reduziert werden.

Die Reifenheiz-Pressvorrichtung kann beispielsweise einen elastischen Heizbalg umfassen, der zur Unterstützung eines Vulkanisiervorgangs eines in der Reifenheiz-Pressvorrichtung befindlichen Fahrzeugreifens ausgebildet und eingerichtet ist.

Dabei kann der elastischen Heizbalg z.B. gemäß der vorliegenden Beschreibung ausgebildet und eingerichtet sein.

Die Auswerteeinrichtung kann beispielsweise zur Durchführung eines Verfahrens gemäß der vorliegenden Beschreibung ausgebildet und eingerichtet sein.

Die vorstehend genannte Aufgabe wir auch gelöst durch eine Reifenheiz-Pressvorrichtung zum Vulkanisieren von Fahrzeugreifen,
wobei die Reifenheiz-Pressvorrichtung insbesondere einen elastischen Heizbalg umfasst, der zur Unterstützung eines Vulkanisiervorgangs eines in der Reifenheiz-Pressvorrichtung befindlichen Fahrzeugreifens ausgebildet und eingerichtet ist,
wobei die Reifenheiz-Pressvorrichtung zum Erfassen mindestens eines Sensorwerts und/oder mindestens einer Steuergröße der Reifenheiz-Pressvorrichtung ausgebildet und eingerichtet ist, und wobei weiterhin die Reifenheiz-Pressvorrichtung eine Auswerteeinrichtung gemäß der vorliegenden Beschreibung umfasst.

Dabei können die Reifenheiz-Pressvorrichtung, der elastische Heizbalg, der Fahrzeuggreifen, der mindestens eine Sensorwert, die mindestens eine Steuergröße sowie die Auswerteeinrichtung beispielsweise gemäß der vorliegenden Beschreibung ausgebildet und eingerichtet sein.

Weitere vorteilhafte Ausgestaltungen finden sich in den Unteransprüchen.

Nachfolgend wird die vorliegende Erfindung beispielhaft mit Bezug auf die beigefügten Figuren näher erläutert.

Es zeigen:
Figur 1: Beispiel für eine Reifenheiz-Pressvorrichtung;
Figur 2: Schematische Darstellung eines Dampf-Systems für eine Reifenheiz-Pressvorrichtung mit einer zugehörigen Steuer- und Auswerteeinrichtung;
Figur 3: Darstellung des Dampf-Systems gemäß Figur 2 mit alternativer Ausgestaltung der zugehörigen Steuer- und Auswerteeinrichtung;
Figur 4: Beispielhafte Ausgestaltung eines als neuronales Netz mit Autoencoder-Struktur ausgebildeten ML-Modells.

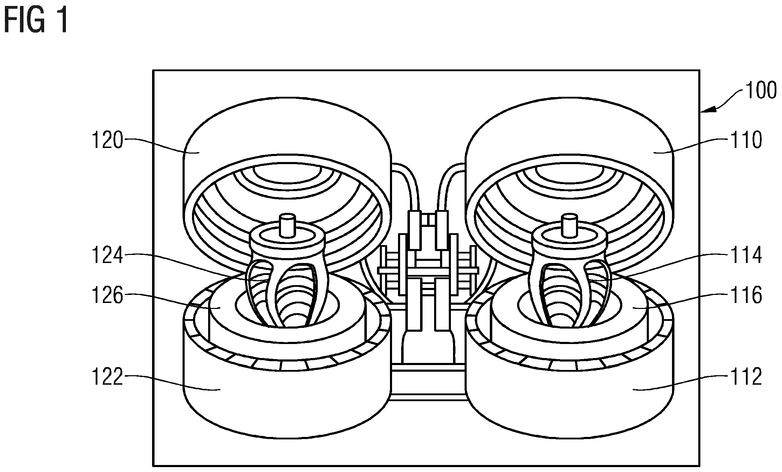

Figur 1 zeigt ein Ausführungsbeispiel für eine Reifenheiz-Pressvorrichtung 100 gemäß der vorliegenden Beschreibung. Dabei sind der Einfachheit halber in Figur 1 nur einige der wesentlichen Teile einer solchen Reifenheiz-Pressvorrichtung 100 (auch Reifenheizpresse 100 genannt) bezeichnet. Für weitere Details zu derartigen Reifenheiz-Pressvorrichtungen 100 wird auf die zugehörige Fachliteratur verwiesen.

Die Reifenheizpresse 100 umfasst zwei gleichartige Vulkanisier-Stationen zum parallelen Vulkanisieren eines ersten Reifenrohlings 116 sowie eines zweiten Reifenrohlings 126. Zum Vulkanisieren der Reifenrohlinge 116, 126 umfasst die Reifenheizpresse 100 zwei untere Reifenformen 112, 122 sowie zwei obere Reifenformen 110, 120, welche die jeweiligen Reifenrohlinge 116, 126 während des Vulkanisiervorgangs umgeben. In Figur 1 sind die oberen Reifenformen 110, 120 sowie die unteren Reifenformen 112, 122 in einem geöffneten Zustand dargestellt, welcher zum Beladen mit den Reifenrohlingen 116, 126 verwendet wird. Während des Vulkanisiervorgangs der Reifenrohlinge 116, 126 liegen die oberen Reifenformen 110, 120 jeweils auf den unteren Reifenformen 112, 122 auf und bilden so einen geschlossenen Zustand.

Zur Unterstützung des Vulkanisierens der Reifenrohlinge 116, 126 umfasst die Reifenheizpresse 100 zwei Heizbalge 114, 124, welche in Figur 1 in einem entlüfteten bzw. abgelassenen Zustand dargestellt sind. Im Rahmen des Vulkanisiervorgangs der Reifenrohlinge 116, 126 werden die Heizbalge 114, 124 mit heißem Dampf unter hohem Druck befüllt, dehnen sich innerhalb der jeweiligen Reifenrohlinge 116, 126 aus und pressen diese auf diese Weise gegen die unteren 112, 122 bzw. oberen Reifenformen 110, 120. Auf diese Weise wird neben dem eigentlichen Vulkanisieren des Reifenmaterials beispielsweise weiterhin ein Reifenprofil und auch andere reliefartige Strukturen des Fahrzeugreifens 116, 126 in den Reifenrohling 116, 126 eingeprägt.

Der hier genannte heiße Dampf zum Befüllen der Heizbalge 114, 124 ist nur ein Beispiel für die verschiedensten in solchen Reifenheiz-Pressvorrichtungen 100 verwendbare Gase bzw. Flüssigkeiten. Diese können im Rahmen des Vulkanisiervorgangs beispielsweise Temperaturen von bis zu 100 Grad Celsius, vorteilhafterweise von bis zu 200 Grad Celsius und weiterhin vorteilhafterweise bis zu 250 oder 300 Grad Celsius aufweisen.

Der Heizbalg und das entsprechenden Medien-System kann weiterhin derart ausgebildet und eingerichtet sein, dass als Gase beispielsweise Luft, Wasserdampf, Stickstoff und/oder weitere Gase - u.a. auch mit den o.g. Temperaturen - verwendet werden können. Soll stattdessen z.B. eine Flüssigkeit verwendet werden, so wird häufig Wasser eingesetzt.

Der Heizbalg 114, 124 kann dabei derart ausgebildet und eingerichtet sein, dass er, zumindest im Inneren eines Reifenrohlings, einem Druck von bis zu 30 bar oder mehr, oder auch einem Unterdruck bis zu -1 bar widerstehen kann. Auch das das entsprechende Mediensystem kann dann für diese Druckbereiche ausgelegt sein.

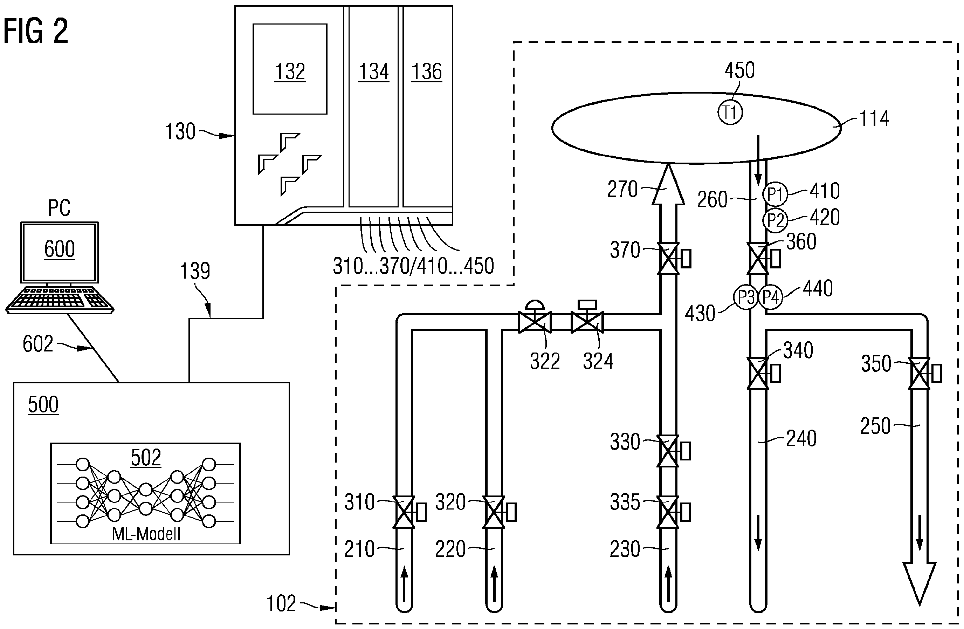

Figur 2 zeigt ein Wasserdampf-Mediensystem 102 mit dem Heizbalg 114 des rechten Teils der in Figur 1 dargestellten Reifenheizpresse 100. Dabei ist im Bereich des Heizbalgs 114 ein Temperatursensor 450 angebracht, mit welchem sich die Temperatur des Heizbalgs 114 und/oder im Inneren des Heizbalgs 114 ermitteln lässt. Am Ausgangsbereich des Heizbalgs, auf der rechten Seite des Mediensystems 102, befindet sich ein erster Drucksensor 410, welcher zum Messen eines Drucks zwischen 0 und 4 bar ausgebildet ist. Weiterhin befindet sich dort ein zweiter Drucksensor 420, welcher zum Messen eines Drucks zwischen -1 und 32 bar ausgebildet ist. Vermittels der beiden Drucksensoren 410, 420 sowie des Temperatursensors 450 lässt sich der Zustand des Wasserdampfs im Heizbalg 114 in den verschiedenen Druck und Temperaturbereichen mit guter Genauigkeit bestimmen.

Der rechte Bereich des Wasserdampf-Mediensystems 102 ist zum Zufluss von Wasserdampf ausgebildet und eingerichtet. Ganz links befindet sich ein Zuflusskanal 210 zum Zufluss von Wasserdampf unter einem relativ niedrigen Druck zwischen 2 und 8 bar und Temperaturen von 110 bis 180 °C. Zur Regelung des Zuflusses in dieser ersten Zuflussleitung 210 ist ein An-Aus-Ventil 310 in dieser Zuflussleitung 210 vorgesehen.

In Figur 2 rechts neben dieser ersten Zuflussleitung 210 ist eine zweite Zuflussleitung 220 zum Zufluss von Wasserdampf mit hohem Druck zwischen 17 und 30 bar vorgesehen und mit einer Temperatur zwischen 190 und 230 °C. In dieser zweiten Zuflussleitung 220 befindet sich wiederum ein An-Aus-Ventil 320 zum Ein- und Ausschalten dieses Wasserdampfstroms. Nach dem Zusammenführen dieser beiden Zuflussleitungen 210, 220 ist in der zusammengeführten Zuflussleitung ein Regelventil 322 vorgesehen, mit welchem sich der jeweilige Wasserdampfstrom genauer regeln lässt. In der Zuflussleitung nachfolgend angeordnet ist ein Sicherheitsventil 321.

In Figur 2 rechts neben der Hochdruck-Zufuhrleitung 220 ist eine weitere Zufuhrleitung 230 angeordnet, welche zum Zustrom weiterer Prozessgase oder Flüssigkeiten vorgesehen ist. Auch in dieser dritten Zuflussleitung 230 befindet sich ein An-Aus-Ventil 335 zum An- und Ausschalten eines entsprechenden Gas- oder Flüssigkeitsstroms durch diese dritte Zufuhrleitung 230.

Alle drei Zufuhrleitungen 210, 220, 230 laufen dann zusammen in einer einzigen Heizbalg-Zuführung 270, in der ein Haupteinlassventil 370 vorgesehen ist.

Auf der Auslassseite des Heizbalgs ist eine Haupt-Auslassleitung 260 zum Abführen von im Heizbalg 114 enthaltenen Flüssigkeiten oder Gasen vorgesehen. In dieser Auslassleitung 260 befinden sich auch die vorstehend genannten Drucksensoren 410, 420. Diesen Drucksensoren in Auslassrichtung nach geordnet ist ein Hauptauslassventil 360 zur Regelung des Medien-auslasse aus dem Heizbalg 114. Dem Auslassventil 360 nach geordnet befindet sich in der Auslassleitung 260 wiederum ein Dritter Drucksensor 430 zum Nachweis von Medien in einem Druckbereich zwischen null und vier bar sowie ein vierter Drucksensor 440 zum zur Druckmessung von Medien in einem Druckbereich zwischen minus ein und 32 bar. Der Haupt Auslassleitung 260 nach geordnet ist eine weitere Auslassleitung 240 mit einem an-aus-Ventil 340.

Nach der Haupt Auslassleitung 260 von der Auslassleitung 240 abgehend ist eine Unterdruckleitung 250 mit einem an-aus-Ventil 350 vorgesehen, über welche beispielsweise im Heizbalg 114 enthaltene Gase oder Flüssigkeiten aktiv abgesaugt werden können. Dabei kann die Absaugen Leitung 450 bzw. eine dahinter angebrachte Pumpe (nicht in Figur zwei dargestellt) beispielsweise zum Aufbau eines Vakuums im Bereich von -0,5 bis -0, 1 bar und einer maximalen Temperatur der Medien von 60 °C vorgesehen sein.

Die in Figur 2 dargestellten und/oder vorstehend erläuterten Ventile 310, 320, 322, 324, 330, 335, 370, 340, 350, 360 und Sensoren 410, 420, 430, 440, 450 sind Beispiele für Komponenten der Reifenheiz-Pressvorrichtung 100, die für einen vorgesehenen Vulkanisiervorgang eines Fahrzeugreifens 116, 126 in der Reifenheiz-Pressvorrichtung 100 erforderlich sind oder verwendet werden. Die in Figur 2 dargestellten Sensoren 410, 420, 430, 440, 450 und in den in Figur 2 dargestellten Ventilen 310, 320, 322, 324, 330, 335, 370, 340, 350, 360 gegebenenfalls vorhandene Sensoren (z.B. zum Erfassen einer Stellung bzw. eines Zustands des jeweiligen Ventils 310, 320, 322, 324, 330, 335, 370, 340, 350, 360) sind Beispiele für Sensoren 410, 420, 430, 440, 450 der Reifenheiz-Pressvorrichtung 100, die für einen vorgesehenen Vulkanisiervorgang eines Fahrzeugreifens 116, 126 in der Reifenheiz-Pressvorrichtung 100 erforderlich sind oder verwendet werden.

Weiterhin ist in Figur 2 eine Steuereinrichtung 130 dargestellt, welche als eine modulare Steuerungseinrichtung 130 mit einem Zentralmodul 132 sowie einem ersten Eingabe-Ausgabe-Modul 134 sowie einem zweiten Eingabe-Ausgabe-Modul 136 ausgebildet und eingerichtet ist.

Dabei gehen entsprechende Signal-Ausgangsleitungen von den Eingabe-Ausgabe-Modulen 134, 136 zu den verschiedenen Ventilen 310, 320, 322, 321, 330, 335, 370, 360, 340, 350 des Mediensystems 102. Über diese Signal-Ausgangsleitungen können Steuersignale vom Zentralmodul 132 der Steuereinrichtung 130 zu den vorstehend genannten Ventilen 310, 320, 322, 321, 330, 335, 370, 360, 340, 350 übertragen werden, um damit entsprechende Ventilstellungen einzustellen.

Weiterhin gehen entsprechende Signal-Eingangsleitungen von dem Temperatursensor 450 sowie den Drucksensoren 410, 420, 430, 440 zu den Eingabe-Ausgabe-Modulen 134, 136, um die entsprechenden Sensorwerte zum Zentralmodul 132 der Steuereinrichtung 130 zu übertragen.

Dies ist in Figur 2 durch Nennung der Bezugszeichen der entsprechenden Ventile und Sensoren unterhalb der symbolisch unterhalb der Steuerung 130 dargestellten Aus- und Eingangsleitungen symbolisiert.

Im Zentralmodul 132 ist eine Ablaufumgebung für ein entsprechendes Steuerprogramm zur Steuerung der Reifenheizpresse 100 vorgesehen. Zum Vulkanisieren eines im rechten Teil der Reifenheiz Presse 100 eingebrachten Reifenrohlings 116 kann dann beispielsweise im Rahmen des Ablaufs dieses Steuerprogramms vermittels der eingehenden Sensorsignale und der ausgehenden Stellsignale für entsprechende Ventile 310, 320, 322, 324, 330, 335, 370, 360, 340, 350 ein Gas-Zufluss und Gas-Abfluss zum ordnungsgemäßen Unterstützen des Vulkanisiervorgangs gesteuert werden. Auf diese Weise erfolgt eine entsprechende Unterstützung des Vulkanisiervorgangs des Reifenrohlings 116 durch einen entsprechenden Zu- und Abstrom von Wasserdampf in den und aus dem Heizbalg 114.

Weiterhin ist in Figur 2 ein EDGE-Device 500 dargestellt, welches ein Beispiel für eine Auswerteeinrichtung gemäß der vorliegenden Beschreibung darstellt. Dabei enthält das Edge-Device 500 ein neuronales Netz 502. Das neuronale Netz 502 ist dabei ein Ausführungsbeispiel für ein ML-Modell gemäß der vorliegenden Beschreibung.

Dieses Edge-Device 500 ist über eine Feldbus-Leitung 139 mit der Steuereinrichtung 130 verbunden. Über diese Feldbus-Leitung können beispielsweise Steuerbefehle, die zur Steuerung der Reifenheizpresse 100 verwendet werden, an die Auswerteeinrichtung übertragen werden. Weiterhin können über die Feldbus-Leitung 139 Stellungsinformationen der Ventile 310, 320, 322, 324, 330, 335, 370, 360, 340, 350 des Mediensystems 102 an das Edge-Device 500 übertragen werden. Über diese Feldbus-Leitung können von der Steuerungseinrichtung zudem auch Messwerte des Temperatursensors 450 sowie der Drucksensoren 410,420, 430, 440 an das Edge-Device übertragen werden.

Das neuronale Netz 502 wurde mit einer Vielzahl von Ventil-Stellungs-Werten sowie Temperatur- und Drucksensor-Werten derart trainiert, dass den jeweiligen Stellungs- und Sensorwerten jeweils zugeordnet wurde, ob bei diesen Sensorwerten, bzw. jeweils erfassten Sensorwert-Kombinationen, der Heizbalg ordnungsgemäß funktioniert hat, ob bei den entsprechenden Sensorwerten bzw. Sensorwert-Kombinationen der Heizbalg defekt war (und z.B. ein Leck hatte) oder ob bei diesen Sensorwerten bzw. Sensorwert-Kombinationen in einem absehbaren Zeitraum ein Defekt des Heizbalgs 114, 124 auftrat. Ein derartiger Zeitraum kann beispielsweise sein, dass in diesem Zeitraum beispielsweise 10 Fahrzeuggreifen, 50 Fahrzeuggreifen oder auch 100 Fahrzeuggreifen produziert wurden.

Im Rahmen einer Steuerung des Mediensystems 102 mit der Steuereinrichtung 130 werden dann regelmäßig während der Produktion von Fahrzeuggreifen entsprechend Stellungswerte der Ventile 310, 320, 322, 324, 330, 335, 370, 360, 340, 350 des Mediensystems 102 sowie der Sensoren 410,420, 430, 440, 450 des Mediensystems 102 an das Edge-Device 500 übertragen und dort als Eingangsgrößen in das trainierte neuronale Netz 502 angegeben. Wenn bei wenn bei entsprechenden Eingangsdaten das neuronale Netz die Information ausgibt, dass der Heizbalg 114 in Ordnung ist, dann läuft die Produktion ohne weitere Meldung weiter.

Gibt das neuronale Netz 502 nach Eingabe entsprechender Daten, wie z.B. der vorstehend erläuterten, die Information aus, dass in einem absehbaren Zeitraum ein Defekt des Heizbalgs 114 bevorstehen könnte, wird eine entsprechende Warnungsmeldung an einen Nutzer ausgegeben. Diese Warnmeldung kann z.B. über eine Datenleitung 602 an einen PC 600 übertragen werden und über diesen PC 600 dem Nutzer ausgegeben werden. Diese Warnungsmeldung kann beispielsweise die Information umfassen, dass ein Defekt des Heizbalgs 114, 124 in einem absehbaren Zeitpunkt zu erwarten sein könnte, wobei der absehbare Zeitpunkt in der Nachricht auch noch näher spezifiziert sein kann.

Gibt das neuronale Netz 502 nach Eingabe entsprechender Daten, wie z.B. der vorstehend erläuterten, Information aus, dass ein Defekt des Heizbalgs 114 bereits vorliegt, wird beispielsweise eine entsprechende Warnnachricht an einen Nutzer über den PC 600 ausgegeben. Weiterhin kann in diesem Fall vorgesehen sein, dass vom Edge-Device 500 über den Feldbus 139 eine entsprechende Nachricht auch an die Steuereinrichtung 130 übermittelt wird und über diese an der Reifenheiz-Pressvorrichtung 100 ebenfalls ein Warnsignal ausgegeben wird. Dies kann beispielsweise als eine rote Warnleuchte und/oder ein entsprechendes Tonsignal ausgebildet und eingerichtet sein. Weiterhin kann in diesem Fall vorgesehen sein, dass entsprechende Parameter zur Steuerung der Medien Zu- und Abfuhr derart geändert werden, dass auch mit einem defekten Heizbalg 114, 124 zumindest für einen bestimmten Zeitraum noch qualitativ hochwertige oder zumindest tolerierbare Fahrzeuggreifen erzeugt werden bzw. erzeugbar sind.

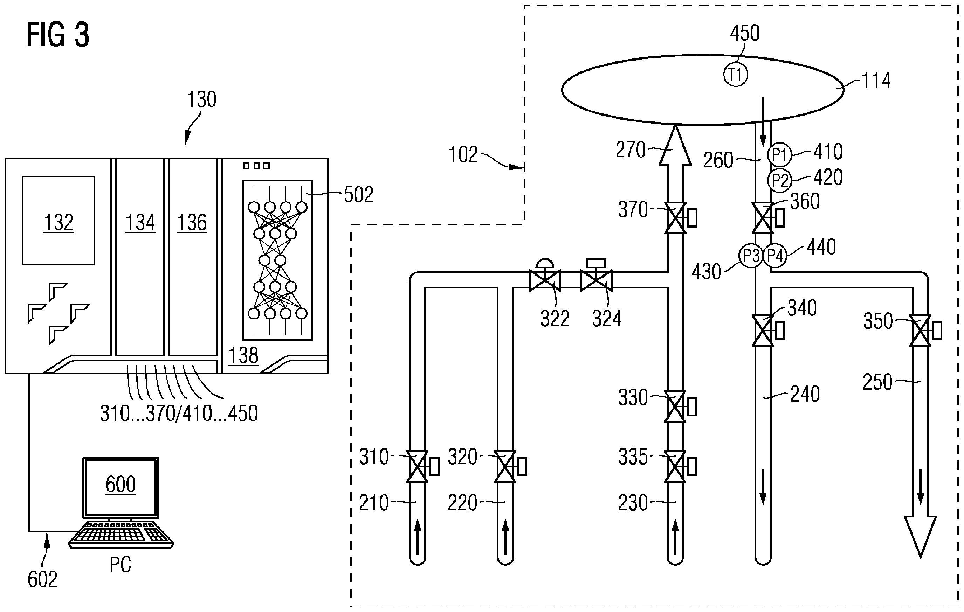

Figur 3 stellt eine weitere Ausgestaltungsmöglichkeit des in Figur 2 dargestellten Systems dar. Dabei stellt Figur 3 das bereits in Figur 2 dargestellte Mediensystem 102 mit dem Heizbalg 114 dar. Weiterhin ist die Steuerungseinrichtung 130 mit dem Zentralmodul 132 sowie den Ein- und Ausgabe-Modulen 134, 136 dargestellt, welche auf die bereits im Zusammenhang mit Figur 2 erläuterte Weise mit den Ventilen 310, 320, 322, 324, 330, 335, 370, 360, 340, 350 und Sensoren 410,420, 430, 440, 450 des Mediensystems 102 zur Steuerung der Zu- und Abfuhr von heißem Wasserdampf zum Heizbalg 114 ausgebildet und eingerichtet sind. Die in Figur 3 dargestellte Steuereinrichtung 130 umfasst weiterhin ein ML-Modul 138, welches das neuronale Netz 502 umfasst, welches beim in Figur 2 dargestellten Ausführungsbeispiel im Edge-Device 500 vorgesehen war.

Beim in Figur 3 dargestellten System erfolgt die Einbindung des neuronalen Netzes 502 unmittelbar über einen Rückwandbus der Steuerungseinrichtung 130 (nicht in Figur 3 dargestellt), über welchen entsprechende Ventilstellungswerte sowie Sensorwerte vom Zentralmodul 132 der Steuereinrichtung 130 an das neuronale Netz 502 im ML-Modul 138 übertragen werden. Die entsprechenden vom neuronalen Netzes 502 ausgegebenen Informationen werden dann wiederum über den Rückwandbus an das Zentralmodul 132 der Steuereinrichtung 130 und vor dort gegebenenfalls - z.B., wenn eine Warnmeldung erzeugt wurde - über die Datenleitung 602 an den PC 600 übertragen. Über den PC 600 kann ein entsprechender Benutzer dann, wie bereits im Zusammenhang mit Figur 2 erläutert, entsprechende Warnungen über den Zustand des Heizbalgs 114, 124 erhalten. Das Training des neuronalen Netzes 502 sowie die Ein- und Ausgangssignale der Steuereinrichtung 300 im Rahmen des Betriebs der Reifenheiz-Pressvorrichtung 100, entsprechen denjenigen im Zusammenhang mit Figur 2 erläuterten.

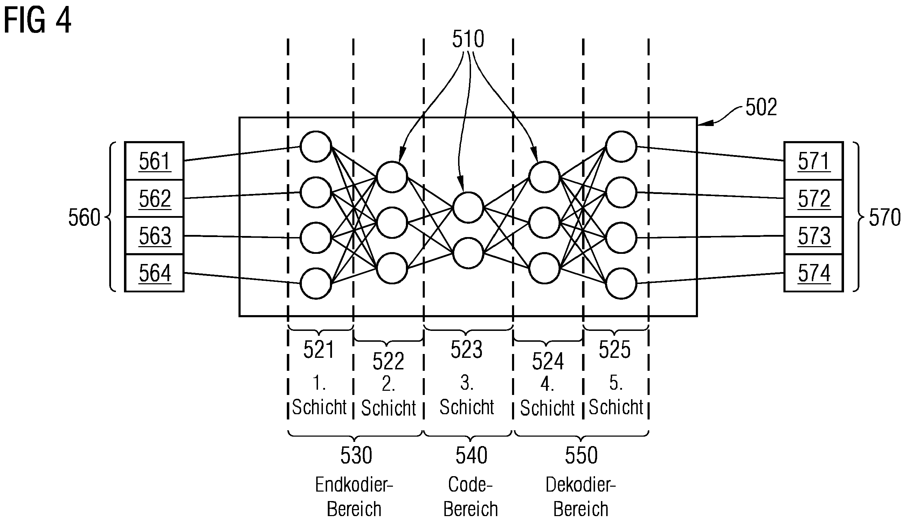

Figur 4 zeigt ein Beispiel für eine Ausgestaltung des in Figur 2 und 3 dargestellten neuronalen Netzes 502. Das in Figur 4 dargestellte neuronale Netz 502 weist dabei eine sogenannte Auto-Encoder-Struktur auf und wird im folgenden auch Auto-Encoder 502 genannt. Zur Vereinfachung der Darstellung der Struktur des Auto-Encoders 502 sind vergleichsweise wenige Knoten eingezeichnet und es wurde aus Darstellungsgründen ein zwei-dimensionales neuronales Netz 502 als Beispiel gewählt.

Ein derartiges neuronales Netz 502 mit einer Auto-Encoder-Struktur stellt ein Beispiel für ein ML-Modell gemäß der vorliegenden Beschreibung dar und kann beispielsweise mit dem Fachmann bekannten Methoden des unüberwachten Lernens gemäß der vorliegenden Beschreibung unter Verwendung von Trainingsdaten gemäß der vorliegenden Beschreibung trainiert werden bzw. trainiert worden sein.

Der Auto-Encoder 502 weist sogenannte Knoten 510 auf, welche im dargestellten Beispiel in fünf Knotenschichten 521, 522, 523, 524, 525 strukturiert sind. Diese Knotenschichten 521 bis 525 werden in Figur 4 als übereinanderliegende Knoten 510 dargestellt. In Figur 4 sind nur einzelne der Knoten 510 mit einem Bezugszeichen gekennzeichnet, um die Darstellung zu vereinfachen und übersichtlicher zu machen. In Figur 4 links ist ein Eingabedaten-Vektor 560 (ein Vektor ist eine eindimensionale Matrix) mit vier Datenfeldern 561, 562, 563, 564 dargestellt, wobei jeweils eines der Eingabefelder 561, 562, 563, 564 mit jeweils einem der Knoten 510 der ersten Knotenschicht 521 des Auto-Encoders 500 verbunden ist. Auf diese Weise werden Daten in den Auto-Encoder 510 eingegeben. Der Auto-Encoder 502 umfasst einen sogenannten Encodier-Bereich 530 welcher die ersten beiden Knotenschichten 521, 522 des Auto-Encoders 500 umfasst. Dabei ist jeder der Knoten 510 der ersten Knotenschicht 521 mit jedem der Knoten 510 der zweiten Knotenschicht 522 verbunden.

An den Encodier-Bereich 530 anschließend findet sich ein Code-Bereich 540, welcher aus einer Knotenschicht 523 besteht. Dabei ist wiederum jeder Knoten 510 der zweiten Schicht 522 des Encodier-Bereichs 530 mit jedem Knoten der Code-Schicht 523 des Code-Bereichs 540 verbunden.

Anschließend an den Code-Bereich 540 weist die Auto-Encoder-Struktur 102 einen Decodier-Bereich 550 auf, welcher wiederum aus zwei Knotenschichten 524, 525 besteht. Die letzte der Knotenschichten 525 ist wiederum mit Datenfeldern 571, 572, 573, 574 eines Ausgangsdaten-Vektors 570 verbunden.

Das Training des Autoencoders 502 kann nun beispielsweise so erfolgen, dass ein Eingangsdatensatz 560, z.B. umfassend Stellungswerte von Ventilen 310, 320, 322, 324, 330, 335, 370, 360, 340, 350 sowie Sensoren 410,420, 430, 440, 450 des Mediensystems 102, in die erste Knotenschicht 521 des Encodierbereichs 530 eingegeben wird und dann über eines der für Autoencoder anwendbaren oder typischen Lernverfahren die Parameter der Knoten 510 und Knoten-Verbindungen des Autoencoders 500 derart angepasst werden, dass der Ausgangsdatenvektor 570, der von der letzten Knotenschicht 525 des Dekodierbereichs 550 ausgegeben wird, dem Eingangsdatenvektor 560 entspricht, oder zumindest näherungsweise dem Eingangsdatenvektor 560 entspricht. Solche typischen Lernverfahren sind beispielsweise das so genannte "Backwards Propagation of Errors" ("Back Propagation") -Verfahren, konjugierte Gradientenmethoden ("Konjugate Gradient Methods"), ein so genannte "Restricted Bolzman Machine" -Mechanismus oder vergleichbare Mechanismen bzw. Kombinationen davon. Während des Trainings ermittelte Parameter eines neuronalen Netzes können beispielsweise eine Gewichtung einer Knoten-Verbindung bzw. eines Eingangswertes für einen Knoten ("Weight"), ein Vorspannungswert für einen Knoten ("Bias"), eine Aktivierungsfunktion für einen Netzknoten bzw. Parameter einer solchen Aktivierungsfunktion (z.B. "Sigmoid Function", "Logistic Function", "Activation Function"...) und/oder eine Aktivierungsschwelle für einen Netzknoten ("Threshold") oder vergleichbare Parameter sein.

Die vorstehend beschriebene Lernmethodik für den in Figur 4 dargestellten Autoencoder 500 ist ein Beispiel für sogenanntes "unüberwachtes Lernen" (unsupervised learning).

Eine neuronales Netz 502 gemäß der vorliegenden Beschreibung kann z.B. alternativ auch eine Netzwerkstruktur für überwachtes Lernen umfassen. Beispielsweise können auch Netzwerkstrukturen für überwachtes Lernen und unüberwachtes Lernen kombiniert sein. Beispielsweise kann das in den vorliegenden Figuren dargestellte ML-Modell 502 ein neuronales Netz mit einer Autoencoder-Struktur umfassen, wie sie beispielsweise in Figur 4 dargestellt ist, und/oder auch mehrere weitere Netzwerkstrukturen. Dabei kann die Autoencoder-Struktur sowohl was die Zahl der jeweils beteiligten Knoten als auch die Dimensionalität der Knotenschichten angeht, und auch was die Zahl der Knoten-Schichten angeht, von dem in Figur 4 dargestellten Beispiel für eine Autoencoder-Struktur 502 abweichen.

Bei der in Figur 4 dargestellten Autoencoder-Struktur handelt es sich um ein Beispiel für einen so genannten tiefen Auto-Encoder 502, da nicht alle der Knoten 510 des Auto-Encoders 502 mit einem Ein- oder Ausgang der Autoencoder-Struktur 502 verbunden sind und es somit so genannte "versteckte Schichten" ("Hidden Layers") gibt.

Ganz allgemein können Autoencoder-Strukturen 502 beispielsweise symmetrisch zum Codebereich aufgebaut sein. Dabei können weiterhin beispielsweise die Zahl der Knoten 510 pro Knotenschicht 521, 522, 523, 524, 525 von der Eingangsseite her bis zum Codebereich jeweils Schicht für Schicht abnehmen und dann zur Ausgangsseite hin wieder Schicht für Schicht zunehmen. Auf diese Weise hat dann die Schicht 523 bzw. Schichten im Code-Bereich eine minimale Anzahl von Knoten 510 im Rahmen der Autoencoder-Struktur 502. Der in Figur 4 dargestellte Auto-Encoder 502 ist ein Beispiel für einen solchen vorstehend beschriebenen symmetrischen Auto-Encoder 502.

## Patentansprüche

1. Verfahren zur Überwachung eines Vulkanisiervorgangs eines Fahrzeugreifens (116, 126) in einer Reifenheiz-Pressvorrichtung (100),
wobei mindestens ein Sensorwert und/oder mindestens eine Steuergröße der Reifenheiz-Pressvorrichtung (100) erfasst wird,
**dadurch gekennzeichnet,**
**dass** der mindestens eine Sensorwert und/oder die mindestens eine Steuergröße einer Auswerteeinrichtung zugeführt wird, dass die Auswerteeinrichtung (138, 500) ein vermittels eines maschinellen Lernverfahrens eingerichtetes ML-Modell (502) umfasst,
und **dass** die Auswerteeinrichtung (138, 500) und/oder das ML-Modell (502) eine Warnmeldung ausgibt, wenn eine Auswertung des mindestens einen Sensorwerts und/oder der mindestens einen Steuergröße durch die Auswerteeinrichtung (138, 500) ergibt,
- **dass** ein Defekt oder eine Anomalie der Reifenheiz-Pressvorrichtung (100) oder zumindest eines Teils der Reifenheiz-Pressvorrichtung (100) vorliegt,
- oder dass ein Defekt oder eine Anomalie der Reifenheiz-Pressvorrichtung (100) oder zumindest eines Teils der Reifenheiz-Pressvorrichtung (100) in absehbarer Zeit bevorsteht.

2. Verfahren gemäß Anspruch 1,
**dadurch gekennzeichnet,**
**dass** die Reifenheiz-Pressvorrichtung einen elastischen Heizbalg (114, 124) umfasst, der zur Unterstützung eines Vulkanisiervorgangs eines in der Reifenheiz-Pressvorrichtung (100) befindlichen Fahrzeugreifens (116, 126) ausgebildet und eingerichtet ist.

3. Verfahren gemäß Anspruch 2,
**dadurch gekennzeichnet,**
**dass** die Auswerteeinrichtung (138, 500) und/oder das ML-Modell (502) weiterhin derart ausgebildet und eingerichtet ist, dass eine Warnmeldung ausgegeben wird, wenn eine Auswertung des mindestens einen Sensorwerts oder der mindestens einen Steuergröße durch die Auswerteeinrichtung (138, 500), insbesondere unter Verwendung des ML-Modells (502), ergibt,
- **dass** eine Anomalie oder ein Defekt des Heizbalgs (114, 124) vorliegt,
- oder dass eine Anomalie oder ein Defekt des Heizbalgs (114, 124) in absehbarer Zeit bevorsteht.

4. Verfahren gemäß einem der vorstehenden Ansprüche,
**dadurch gekennzeichnet,**
**dass** alle Sensorwerte des mindestens einen Sensorwerts von Sensoren (410, 420, 430, 440, 450) der Reifenheiz-Pressvorrichtung geliefert werden, die für einen vorgesehenen Vulkanisiervorgang eines Fahrzeugreifens in der Reifenheiz-Pressvorrichtung erforderlich sind oder verwendet werden.

5. Verfahren gemäß einem der vorstehenden Ansprüche,
**dadurch gekennzeichnet,**
**dass** die Reifenheiz-Pressvorrichtung (100) eine Steuereinrichtung (130) zur Steuerung des Vulkanisiervorgangs umfasst, und
**dass** mindestens eine der mindestens einen Steuergröße eine von der Steuereinrichtung (130) im Rahmen des Vulkanisiervorgangs ausgegebene Ansteuergröße für die Reifenheiz-Pressvorrichtung (100) oder eine Komponente der Reifenheiz-Pressvorrichtung (100) umfasst.

6. Verfahren gemäß einem der vorstehenden Ansprüche,
**dadurch gekennzeichnet,**
**dass** die Reifenheiz-Pressvorrichtung (100) einen Drucksensor (410, 420, 430, 440) umfasst, und dass mindestens einer des mindestens einen Sensorwerts von dem Drucksensor (410, 420, 430, 440) geliefert wird,
und/oder
**dass** die Reifenheiz-Pressvorrichtung einen Temperatursensor (450) umfasst, und dass mindestens einer des mindestens einen Sensorwerts von dem Temperatursensor (450) geliefert wird.

7. Verfahren gemäß einem der Ansprüche 2 bis 6,
**dadurch gekennzeichnet,**
**dass** die Reifenheiz-Pressvorrichtung (100) mindestens ein Zufuhrventil (310, 320, 322, 324, 330, 335, 370) zur Regelung der Zufuhr eines Gases oder einer Flüssigkeit zu dem Heizbalg (114, 124) sowie mindestens ein Ablassventil (340, 350, 360) zur Regelung des Abtransports des Gases oder der Flüssigkeit aus dem Heizbalg (114, 124) umfasst, und
**dass** mindestens einer des mindestens einen Sensorwerts von einem Stellungssensor des mindestens einen Zufuhrventils (310, 320, 322, 324, 330, 335, 370) geliefert wird und/oder von einem Stellungssensor des mindestens einen Ablassventils (340, 350, 360) geliefert wird,
und/oder
**dass** mindestens eine der mindestens einen Steuergröße eine Ansteuergröße für das mindestens eine Zufuhrventil (310, 320, 322, 324, 330, 335, 370) umfasst und/oder eine Ansteuergröße für das mindestens eine Ablassventil (340, 350, 360) umfasst.

8. Verfahren gemäß einem der Ansprüche 2 bis 7,
**dadurch gekennzeichnet,**
**dass** mindestens einer des mindestens einen Sensorwerts von einem Heizbalg-Drucksensor (410, 420) geliefert wird, der zur Messung eines Innendrucks im Heizbalg (114, 124) ausgebildet und eingerichtet ist,
und/oder
**dass** mindestens einer des mindestens einen Sensorwerts von einem Zufuhr-Drucksensor geliefert wird, der zur Messung eines Drucks in einer Zufuhr-Leitung (210, 220, 230, 270) für den Heizbalg (114, 124) ausgebildet und eingerichtet ist,
und/oder
**dass** mindestens einer des mindestens einen Sensorwerts von einem Ablass-Drucksensor (410, 420, 430, 440) geliefert wird, der zur Messung eines Drucks in einer Ablass-Leitung (240, 250, 260) für den Heizbalg (114, 124) ausgebildet und eingerichtet ist.

9. Verfahren gemäß einem der Ansprüche 2 bis 8,
**dadurch gekennzeichnet,**
**dass** mindestens einer des mindestens einen Sensorwerts von einem Heizbalg-Temperatursensor (450) geliefert wird, der zur Messung einer Temperatur im Heizbalg (114, 124) ausgebildet und eingerichtet ist,
und/oder
**dass** mindestens einer des mindestens einen Sensorwerts von einem Zufuhr-Temperatursensor geliefert wird, der zur Messung einer Temperatur in einer Zufuhr-Leitung (210, 220, 230, 270) für den Heizbalg (114, 124) ausgebildet und eingerichtet ist, und/oder
**dass** mindestens einer des mindestens einen Sensorwerts von einem Ablass-Temperatursensor geliefert wird, der zur Messung einer Temperatur in einer Ablass-Leitung (240, 250, 260) für den Heizbalg (114, 124) ausgebildet und eingerichtet ist.

10. Verfahren gemäß einem der vorstehenden Ansprüche,
**dadurch gekennzeichnet,**
**dass** die Auswerteeinrichtung (138, 500) eine Simulationsumgebung umfasst, die zum Ablauf eines Simulationsprogramms zur Simulation der Reifenheiz-Pressvorrichtung, oder zur Simulation von Teilen oder Komponenten der Reifenheiz-Pressvorrichtung, ausgebildet und eingerichtet ist,
insbesondere, dass die Auswerteeinrichtung (138, 500) eine Simulationsumgebung mit einem Simulationsprogramm zur Simulation der Reifenheiz-Pressvorrichtung, oder zur Simulation von Teilen oder Komponenten der Reifenheiz-Pressvorrichtung, umfasst.

11. Verfahren gemäß einem der vorstehenden Ansprüche,
**dadurch gekennzeichnet,**
**dass** das ML-Modell (502) als ein neuronales Netz (502) ausgebildet und eingerichtet ist, welches zumindest unter anderem mit Sensorwerten und/oder Steuergrößen gemäß einem der Ansprüche 4 bis 10 trainiert wurde.

12. Verfahren gemäß Anspruch 11,
**dadurch gekennzeichnet,**
**dass** das neuronale Netz (502) eine Autoencoder-Struktur umfasst, welche mit einem Verfahren des unüberwachten Lernens zumindest unter anderem mit Sensorwerten und/oder Steuergrö-ßen gemäß einem der Ansprüche 4 bis 10 trainiert wurde.

13. Verfahren gemäß Anspruch 11 oder 12,
**dadurch gekennzeichnet,**
**dass** das neuronale Netz (502) eine Deep Learning Architektur aufweist und mit einem Verfahren des überwachten Lernens zumindest unter anderem mit Sensorwerten und/oder Steuergrößen gemäß einem der Ansprüche 4 bis 10 trainiert wurde.

14. Verfahren gemäß einem der Ansprüche 1 bis 10,
**dadurch gekennzeichnet,**
**dass** das ML-Modell (502) als eine Support-Vektor-Maschine, ein Gradient-Boosted-Tree-Modell oder ein Random-Forest-Modell ausgebildet und eingerichtet ist, welche jeweils zumindest unter anderem unter Verwendung von Sensorwerten und/oder Steuergrößen gemäß einem der Ansprüche 4 bis 10 eingerichtet wurden.

15. Auswerteeinrichtung (138, 500) zur Überwachung eines Vulkanisiervorgangs eines Fahrzeugreifens (116, 126) in einer Reifenheiz-Pressvorrichtung (100),
wobei die Reifenheiz-Pressvorrichtung (100) zum Erfassen mindestens eines Sensorwerts und/oder mindestens einer Steuergröße der Reifenheiz-Pressvorrichtung (100) ausgebildet und eingerichtet ist,
**dadurch gekennzeichnet,**
**dass** die Auswerteeinrichtung (138, 500) ein vermittels eines maschinellen Lernverfahrens eingerichtetes ML-Modell (502) umfasst,
**dass** die Auswerteeinrichtung (138, 500) zum Empfang des mindestens einen Sensorwerts und/oder der mindestens einen Steuergröße ausgebildet und eingerichtet ist,
und **dass** die Auswerteeinrichtung (138, 500) und/oder das ML-Modell (502) weiterhin derart ausgebildet und eingerichtet sind, dass eine Warnmeldung ausgegeben wird, wenn eine Auswertung des mindestens einen Sensorwerts und/oder der mindestens einen Steuergröße durch die Auswerteeinrichtung (138, 500), insbesondere unter Verwendung des ML-Modells (502), ergibt,
- **dass** ein Defekt oder eine Anomalie der Reifenheiz-Pressvorrichtung (100) oder zumindest ein Teil der Reifenheiz-Pressvorrichtung (100) vorliegt,
- oder dass ein Defekt oder eine Anomalie der Reifenheiz-Pressvorrichtung (100) oder zumindest eines Teils der Reifenheiz-Pressvorrichtung (100) in absehbarer Zeit bevorsteht.

16. Auswerteeinrichtung gemäß Anspruch 15,
**dadurch gekennzeichnet,**
**dass** die Reifenheiz-Pressvorrichtung (100) einen elastischen Heizbalg (114, 124) umfasst, der zur Unterstützung eines Vulkanisiervorgangs eines in der Reifenheiz-Pressvorrichtung (100) befindlichen Fahrzeugreifens (116, 126) ausgebildet und eingerichtet ist.

17. Auswerteeinrichtung gemäß Anspruch 15 oder 16,
**dadurch gekennzeichnet,**
**dass** die Auswerteeinrichtung (138, 500) zur Durchführung eines Verfahrens gemäß einem der Ansprüche 1 bis 14 ausgebildet und eingerichtet ist.

18. Reifenheiz-Pressvorrichtung zum Vulkanisieren von Fahrzeugreifen,
wobei die Reifenheiz-Pressvorrichtung (100) insbesondere einen elastischen Heizbalg (114, 124) umfasst, der zur Unterstützung eines Vulkanisiervorgangs eines in der Reifenheiz-Pressvorrichtung (100) befindlichen Fahrzeugreifens (116, 126) ausgebildet und eingerichtet ist, und
wobei die Reifenheiz-Pressvorrichtung (100) zum Erfassen mindestens eines Sensorwerts und/oder mindestens einer Steuergröße der Reifenheiz-Pressvorrichtung (100) ausgebildet und eingerichtet ist,
**dadurch gekennzeichnet,**
**dass** die Reifenheiz-Pressvorrichtung (100) eine Auswerteeinrichtung (138, 500) gemäß einem der Ansprüche 15 bis 17 umfasst.

## Claims

1. Method for monitoring a vulcanization process of a vehicle tire (116, 126) in a tire heating press (100),
wherein at least one sensor value and/or at least one control variable of the tire heating press (100) is acquired, **characterized**
**in that** the at least one sensor value and/or the at least one control variable is fed to an evaluation device,
**in that** the evaluation device (138, 500) comprises an ML model (502) configured by way of a machine learning method,
and **in that** the evaluation device (138, 500) and/or the ML model (502) outputs a warning notification when an evaluation of the at least one sensor value and/or of the at least one control variable by the evaluation device (138, 500) reveals
- that there is a defect or an anomaly with the tire heating press (100) or at least part of the tire heating press (100),
- or that there will be a defect or an anomaly with the tire heating press (100) or at least part of the tire heating press (100) in the foreseeable future.

2. Method according to Claim 1,
**characterized**
**in that** the tire heating press comprises an elastic bladder (114, 124) that is designed and configured to support a vulcanization process of a vehicle tire (116, 126) located in the tire heating press (100).

3. Method according to Claim 2,
**characterized**
**in that** the evaluation device (138, 500) and/or the ML model (502) is furthermore designed and configured such that a warning notification is output when an evaluation of the at least one sensor value or of the at least one control variable by the evaluation device (138, 500), in particular using the ML model (502), reveals
- that there is an anomaly or a defect with the bladder (114, 124),
- or that there will be an anomaly or a defect with the bladder (114, 124) in the foreseeable future.

4. Method according to one of the preceding claims,
**characterized**
**in that** all sensor values of the at least one sensor value are delivered by sensors (410, 420, 430, 440, 450) of the tire heating press that are also required or used for an intended vulcanization process of a vehicle tire in the tire heating press.

5. Method according to one of the preceding claims,
**characterized**
**in that** the tire heating press (100) comprises a control device (130) for controlling the vulcanization process, and
**in that** at least one of the at least one control variable comprises an actuation variable, output by the control device (130) in the course of the vulcanization process, for the tire heating press (100) or a component of the tire heating press (100) .

6. Method according to one of the preceding claims,
**characterized**
**in that** the tire heating press (100) comprises a pressure sensor (410, 420, 430, 440), and in that at least one of the at least one sensor value is delivered by the pressure sensor (410, 420, 430, 440),
and/or
**in that** the tire heating press comprises a temperature sensor (450), and in that at least one of the at least one sensor value is delivered by the temperature sensor (450).

7. Method according to one of Claims 2 to 6,
**characterized**
**in that** the tire heating press (100) comprises at least one feed valve (310, 320, 322, 324, 330, 335, 370) for regulating the feed of a gas or of a liquid to the bladder (114, 124) and at least one discharge valve (340, 350, 360) for regulating the transportation of the gas or of the liquid out of the bladder (114, 124), and
**in that** at least one of the at least one sensor value is delivered by a position sensor of the at least one feed valve (310, 320, 322, 324, 330, 335, 370) and/or is delivered by a position sensor of the at least one discharge valve (340, 350, 360),
and/or
**in that** at least one of the at least one control variable comprises an actuation variable for the at least one feed valve (310, 320, 322, 324, 330, 335, 370) and/or an actuation variable for the at least one discharge valve (340, 350, 360).

8. Method according to one of Claims 2 to 7,
**characterized**
**in that** at least one of the at least one sensor value is delivered by a bladder pressure sensor (410, 420) that is designed and configured to measure an internal pressure in the bladder (114, 124),
and/or
**in that** at least one of the at least one sensor value is delivered by a feed pressure sensor that is designed and configured to measure a pressure in a feed line (210, 220, 230, 270) for the bladder (114, 124),
and/or
**in that** at least one of the at least one sensor value is delivered by a discharge pressure sensor (410, 420, 430, 440) that is designed and configured to measure a pressure in a discharge line (240, 250, 260) for the bladder (114, 124).

9. Method according to one of Claims 2 to 8,
**characterized**
**in that** at least one of the at least one sensor value is delivered by a bladder temperature sensor (450) that is designed and configured to measure a temperature in the bladder (114, 124),
and/or
**in that** at least one of the at least one sensor value is delivered by a feed temperature sensor that is designed and configured to measure a temperature in a feed line (210, 220, 230, 270) for the bladder (114, 124),
and/or
**in that** at least one of the at least one sensor value is delivered by a discharge temperature sensor that is designed and configured to measure a temperature in a discharge line (240, 250, 260) for the bladder (114, 124).

10. Method according to one of the preceding claims,
**characterized**
**in that** the evaluation device (138, 500) comprises a simulation environment that is designed and configured to run a simulation program for simulating the tire heating press, or for simulating parts or components of the tire heating press,
in particular in that the evaluation device (138, 500) comprises a simulation environment with a simulation program for simulating the tire heating press or for simulating parts or components of the tire heating press.

11. Method according to one of the preceding claims,
**characterized**
**in that** the ML model (502) is designed and configured as a neural network (502) that has been trained at least inter alia with sensor values and/or control variables according to one of Claims 4 to 10.

12. Method according to Claim 11,
**characterized**
**in that** the neural network (502) comprises an autoencoder structure that has been trained at least inter alia with sensor values and/or control variables according to one of Claims 4 to 10 using an unsupervised learning method.

13. Method according to Claim 11 or 12,
**characterized**
**in that** the neural network (502) has a deep learning architecture and has been trained at least inter alia with sensor values and/or control variables according to one of Claims 4 to 10 using a supervised learning method.

14. Method according to one of Claims 1 to 10,
**characterized**
**in that** the ML model (502) is designed and configured as a support vector machine, a gradient boosted tree model or a random forest model, each of which have been configured at least inter alia using sensor values and/or control variables according to one of Claims 4 to 10.

15. Evaluation device (138, 500) for monitoring a vulcanization process of a vehicle tire (116, 126) in a tire heating press (100),
wherein the tire heating press (100) is designed and configured to acquire at least one sensor value and/or at least one control variable of the tire heating press (100),
**characterized**
**in that** the evaluation device (138, 500) comprises an ML model (502) configured by way of a machine learning method,
**in that** the evaluation device (138, 500) is designed and configured to receive the at least one sensor value and/or the at least one control variable,
and **in that** the evaluation device (138, 500) and/or the ML model (502) are furthermore designed and configured such that a warning notification is output when an evaluation of the at least one sensor value and/or of the at least one control variable by the evaluation device (138, 500), in particular using the ML model (502), reveals
- that there is a defect or an anomaly with the tire heating press (100) or at least part of the tire heating press (100),
- or that there will be a defect or an anomaly with the tire heating press (100) or at least part of the tire heating press (100) in the foreseeable future.

16. Evaluation device according to Claim 15,
**characterized**
**in that** the tire heating press (100) comprises an elastic bladder (114, 124) that is designed and configured to support a vulcanization process of a vehicle tire (116, 126) located in the tire heating press (100).

17. Evaluation device according to Claim 15 or 16,
**characterized**
**in that** the evaluation device (138, 500) is designed and configured to perform a method according to one of Claims 1 to 14.

18. Tire heating press for vulcanizing vehicle tires,
wherein the tire heating press (100) in particular comprises an elastic bladder (114, 124) that is designed and configured to support a vulcanization process of a vehicle tire (116, 126) located in the tire heating press (100), and
wherein the tire heating press (100) is designed and configured to acquire at least one sensor value and/or at least one control variable of the tire heating press (100),
**characterized**
**in that** the tire heating press (100) comprises an evaluation device (138, 500) according to one of Claims 15 to 17.

## Revendications

1. Procédé destiné à la surveillance d'un processus de vulcanisation d'un pneu de véhicule (116, 126) dans un dispositif de compression à chaud de pneu (100) ;
dans lequel on enregistre au moins une valeur de détection et/ou au moins une grandeur de commande du dispositif de compression à chaud de pneu (100) ;
**caractérisé**
**en ce que** l'on achemine ladite au moins une valeur de détection et/ou ladite au moins une grandeur de commande à un mécanisme d'évaluation ;
**en ce que** le mécanisme d'évaluation (138, 500) comprend un modèle d'apprentissage automatique (502) conçu par l'intermédiaire d'un procédé d'apprentissage automatique ;
et **en ce que** le mécanisme d'évaluation (138, 500) et/ou le modèle d'apprentissage automatique (502) émet un message d'avertissement lorsqu'une évaluation de ladite au moins une valeur de détection et/ou de ladite au moins une grandeur de commande, révèle, par le biais du mécanisme d'évaluation (138, 500) :
- la présence d'un défaut ou d'une anomalie du dispositif de compression à chaud de pneu (100) ou d'au moins une partie du dispositif de compression à chaud de pneu (100),
- ou l'imminence d'un défaut ou d'une anomalie du dispositif de compression à chaud de pneu (100) ou d'au moins une partie du dispositif de compression à chaud de pneu (100), dans un avenir prévisible.

2. Procédé selon la revendication 1,
**caractérisé en ce que** le dispositif de compression à chaud de pneu comprend une vessie élastique (114, 124) qui est réalisée et conçue pour soutenir un processus de vulcanisation d'un pneu de véhicule (116, 126) qui se trouve dans le dispositif de compression à chaud de pneu (100).

3. Procédé selon la revendication 2,
**caractérisé**
**en ce que** le mécanisme d'évaluation (138, 500) et/ou le modèle d'apprentissage automatique (502) est/sont en outre réalisé(s) et conçu(s) d'une manière telle qu'un signal d'avertissement est émis lorsqu'une évaluation de ladite au moins une valeur de détection et/ou de ladite au moins une grandeur de commande révèle, par le biais du mécanisme d'évaluation (138, 500), en particulier en faisant usage du modèle d'apprentissage automatique (502) :
- la présence d'une anomalie ou d'un défaut de la vessie (114, 124),
- ou l'imminence d'une anomalie ou d'un défaut de la vessie (114, 124), dans un avenir prévisible.

4. Procédé selon l'une quelconque des revendications précédentes,
**caractérisé**
**en ce que** l'on fournit, au dispositif de compression à chaud de pneu, toutes les valeurs de détection de ladite au moins une valeur de détection de détecteurs (410, 420, 430, 440, 450), qui sont requises ou qui sont utilisées pour un processus de vulcanisation envisagé d'un pneu de véhicule dans le dispositif de compression à chaud de pneu.

5. Procédé selon l'une quelconque des revendications précédentes,
**caractérisé**
**en ce que** le dispositif de compression à chaud de pneu (100) comprend un mécanisme de commande (130) destiné à la commande du processus de vulcanisation ; et
**en ce qu'**au moins une de ladite au moins une grandeur de commande comprend une grandeur d'activation émise par le mécanisme de commande (130) dans le cadre du processus de vulcanisation pour le dispositif de compression à chaud de pneu (100) ou un composant du dispositif de compression à chaud de pneu (100).

6. Procédé selon l'une quelconque des revendications précédentes,
**caractérisé**
**en ce que** le dispositif de compression à chaud de pneu (100) comprend un capteur de pression (410, 420, 430, 440), et en ce qu'au moins une de ladite au moins une valeur de détection est fournie par le capteur de pression (410, 420, 430, 440),
et/ou
**en ce que** le dispositif de compression à chaud de pneu comprend un capteur de température (450), et en ce qu'au moins une de ladite au moins une valeur de détection est fournie par le capteur de pression (450).

7. Procédé selon l'une quelconque des revendications 2 à 6, **caractérisé**
**en ce que** le dispositif de compression à chaud de pneu (100) comprend au moins un clapet d'admission (310, 320, 322, 324, 330, 335, 370) destiné au réglage de l'admission d'un gaz ou d'un liquide à la vessie (114, 124), de même qu'au moins un clapet de décharge (340, 350, 360) destiné au réglage de l'évacuation du gaz ou du liquide hors de la vessie (114, 124) ; et
**en ce qu'**au moins une de ladite au moins une valeur de détection est fournie par un capteur de position dudit au moins un clapet d'admission (310, 320, 322, 324, 330, 335, 370) et/ou est fournie par un capteur de position dudit au moins un clapet de décharge (340, 350, 360) ;
et/ou
**en ce qu'**au moins une de ladite au moins une grandeur de commande comprend une grandeur d'activation pour ledit au moins un clapet d'admission (310, 320, 322, 324, 330, 335, 370) et/ou une grandeur d'activation pour ledit au moins un clapet de décharge (340, 350, 360).

8. Procédé selon l'une quelconque des revendications 2 à 7, **caractérisé**
**en ce qu'**au moins une de ladite au moins une valeur de détection est fournie par un capteur de la pression de vessie (410, 420) qui est réalisé et conçu pour la mesure d'une pression interne dans la vessie (114, 124) ;
et/ou
**en ce qu'**au moins une de ladite au moins une valeur de détection est fournie par un capteur de la pression d'admission qui est réalisé et conçu pour la mesure d'une pression dans un conduit d'admission (210, 220, 230, 270) pour la vessie (114, 124) ;
et/ou
**en ce qu'**au moins une de ladite au moins une valeur de détection est fournie par un capteur de la pression de décharge (410, 420, 430, 440) qui est réalisé et conçu pour la mesure d'une pression dans un conduit de décharge (240, 250, 260) pour la vessie (114, 124) .

9. Procédé selon l'une quelconque des revendications 2 à 8, **caractérisé**
**en ce qu'**au moins une de ladite au moins une valeur de détection est fournie par un capteur de la température de vessie (450) qui est réalisé et conçu pour la mesure d'une température dans la vessie (114, 124) ;
et/ou
**en ce qu'**au moins une de ladite au moins une valeur de détection est fournie par un capteur de la température d'admission qui est réalisé et conçu pour la mesure d'une température dans un conduit d'admission (210, 220, 230, 270) pour la vessie (114, 124) ;
et/ou
**en ce qu'**au moins une de ladite au moins une valeur de détection est fournie par un capteur de la température de décharge qui est réalisé et conçu pour la mesure d'une température dans un conduit de décharge (240, 250, 260) pour la vessie (114, 124).

10. Procédé selon l'une quelconque des revendications précédentes,
**caractérisé**
**en ce que** le mécanisme d'évaluation (138, 500) comprend un environnement de simulation qui est réalisé et conçu pour le déroulement d'un programme de simulation à des fins de simulation du dispositif de compression à chaud de pneu, ou à des fins de simulation de parties ou de composants du dispositif de compression à chaud de pneu ; en particulier, en ce que le mécanisme d'évaluation (138, 500) comprend un environnement de simulation qui possède un programme de simulation à des fins de simulation du dispositif de compression à chaud de pneu, ou à des fins de simulation de parties ou de composants du dispositif de compression à chaud de pneu.

11. Procédé selon l'une quelconque des revendications précédentes,
**caractérisé**
**en ce que** le modèle d'apprentissage automatique (502) est réalisé et conçu sous la forme d'un réseau neuronal (502) qui a été entraîné, au moins, entre autres, avec des valeurs de détection et/ou des grandeurs de commande selon l'une quelconque des revendications 4 à 10.

12. Procédé selon la revendication 11,
**caractérisé**
**en ce que** le réseau neuronal (502) comprend une structure d'encodeur automatique qui a été entraînée avec un procédé de l'apprentissage non supervisé, au moins, entre autres, avec des valeurs de détection et/ou des grandeurs de commande selon l'une quelconque des revendications 4 à 10.

13. Procédé selon la revendication 11 ou 12,
**caractérisé**
**en ce que** le réseau neuronal (502) présente une architecture d'apprentissage profond et a été entraîné avec un procédé de l'apprentissage supervisé, au moins, entre autres, avec des valeurs de détection et/ou des grandeurs de commande selon l'une quelconque des revendications 4 à 10.

14. Procédé selon l'une quelconque des revendications 1 à 10,
**caractérisé**
**en ce que** le modèle d'apprentissage automatique (502) est réalisé et conçu sous la forme d'une machine à vecteurs de support, d'un modèle d'arbre dopé par gradient ou d'un modèle de forêt d'arbres décisionnels, qui sont conçus, respectivement, au moins, entre autres, en faisant usage des valeurs de détection et/ou des grandeurs de commande selon l'une quelconque des revendications 4 à 10.

15. Mécanisme d'évaluation (138, 500) destiné à la surveillance d'un processus de vulcanisation d'un pneu de véhicule (116, 126) dans un dispositif de compression à chaud de pneu (100),
dans lequel le dispositif de compression à chaud de pneu (100) est réalisé et conçu à des fins d'enregistrement d'au moins une valeur de détection et/ou d'au moins une grandeur de commande du dispositif de compression à chaud de pneu (100) ;
**caractérisé**
**en ce que** le mécanisme d'évaluation (138, 500) comprend un modèle d'apprentissage automatique (502) conçu par l'intermédiaire d'un procédé d'apprentissage automatique ;
**en ce que** le mécanisme d'évaluation (138, 500) est réalisé et conçu pour la réception de ladite au moins une valeur de détection et/ou de ladite au moins une grandeur de commande ;
et **en ce que** le mécanisme d'évaluation (138, 500) et/ou le modèle d'apprentissage automatique (502) sont en outre réalisés et conçus d'une manière telle qu'un signal d'avertissement est émis lorsqu'une évaluation de ladite au moins une valeur de détection et/ou de ladite au moins une grandeur de commande révèle, par le biais du mécanisme d'évaluation (138, 500), en particulier en faisant usage du modèle d'apprentissage automatique (502) :
- la présence d'un défaut ou d'une anomalie du dispositif de compression à chaud de pneu (100) ou d'au moins une partie du dispositif de compression à chaud de pneu (100),
- ou l'imminence d'un défaut ou d'une anomalie du dispositif de compression à chaud de pneu (100) ou d'au moins une partie du dispositif de compression à chaud de pneu (100), dans un avenir prévisible.

16. Mécanisme d'évaluation selon la revendication 15,
**caractérisé en ce que** le dispositif de compression à chaud de pneu (100) comprend une vessie élastique (114, 124) qui est réalisée et conçue pour soutenir un processus de vulcanisation d'un pneu de véhicule (116, 126) qui se trouve dans le dispositif de compression à chaud de pneu (100).

17. Mécanisme d'évaluation selon la revendication 15 ou 16, **caractérisé en ce que** le mécanisme d'évaluation (138, 500) est réalisé et conçu pour la mise en œuvre d'un procédé selon l'une quelconque des revendications 1 à 14.

18. Dispositif de compression à chaud de pneu destiné à la vulcanisation de pneus de véhicules,
dans lequel le dispositif de compression à chaud de pneu (100) comprend en particulier une vessie élastique (114, 124) qui est réalisée et conçue pour soutenir un processus de vulcanisation d'un pneu de véhicule (116, 126) qui se trouve dans le dispositif de compression à chaud de pneu (100), et
dans lequel le dispositif de compression à chaud de pneu (100) est réalisé et conçu à des fins d'enregistrement d'au moins une valeur de détection et/ou d'au moins une grandeur de commande du dispositif de compression à chaud de pneu (100) ;
**caractérisé**
**en ce que** le dispositif de compression à chaud de pneu (100) comprend un mécanisme d'évaluation (138, 500) selon l'une quelconque des revendications 15 à 17.
